(19) Europäisches Patentamt
European Patent Office
Office européen des brevets

(11) Veröffentlichungsnummer: **0 271 649 B1**

(12) **EUROPÄISCHE PATENTSCHRIFT**

(45) Veröffentlichungstag der Patentschrift: **16.10.91**

(21) Anmeldenummer: **87113763.4**

(22) Anmeldetag: **21.09.87**

(51) Int. Cl.⁵: **C07C 69/732**, C07C 315/00, C07C 317/00, C07C 323/00, C08K 5/41, C08K 5/36, C07C 67/08

(54) **Ester von 3-tert.-Butyl- bzw. 3-tert.-Butyl-5-alkyl-4-hydroxylphenyl-(alkan)-carbonsäuren mit Oxethylaten von Bis-(4- bzw. 2-hydroxyphenyl)-alkanen, -oxiden, -sulfiden und -sulfonen, von Tris-(4-hydroxyphenyl)-alkanen und von 1,3,5-Tris-(4-hydroxyphenyl-isopropyliden)-arylen, Verfahren zu ihrer Herstellung und ihre Verwendung als Stabilisatoren.**

(30) Priorität: **18.11.86 DE 3639374**

(43) Veröffentlichungstag der Anmeldung:
**22.06.88 Patentblatt 88/25**

(45) Bekanntmachung des Hinweises auf die Patenterteilung:
**16.10.91 Patentblatt 91/42**

(84) Benannte Vertragsstaaten:
**BE CH DE FR GB IT LI NL**

(56) Entgegenhaltungen:
**EP-A- 0 181 023**
**US-A- 3 944 594**
**US-A- 4 598 113**

(73) Patentinhaber: **HÜLS AKTIENGESELLSCHAFT**
**Patentabteilung / PB 15 - Postfach 13 20**
**W-4370 Marl 1(DE)**

(72) Erfinder: **Küpper, Friedrich-Wilhelm, Dr.**
**Oderbruchstrasse 27**
**W-4370 Marl(DE)**
Erfinder: **Voges, Heinz-Werner, Dr.**
**Im Gorden 45**
**W-4270 Dorsten 21(DE)**
Erfinder: **Pätzold, Werner**
**Breddestrasse 13**
**W-4390 Gladbeck(DE)**
Erfinder: **Schaaf, Richard, Dr.**
**Johannesstrasse 47**
**W-4358 Haltern(DE)**

**EP 0 271 649 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind neue Ester von 3-tert.-Butyl- bzw. 3-tert.-Butyl-5-alkyl-4-hydroxyphenyl-(alkan)-carbonsäuren der Formel I

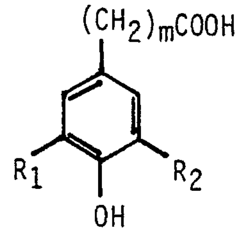

(I)

mit

$R_1$ = $-C(CH_3)_3$,

$R_2$ = H, $C_1$- bis $C_4$-Alkyl, vorzugsweise $-C(CH_3)_3$,

m = 0 bis 4, vorzugsweise 2,

mit Oxethylaten von Bis-(4- bzw. 2-hydroxyphenyl)-alkanen, -oxiden, -sulfiden und -sulfonen, vorzugsweise mit Oxethylaten von Bis-(4-hydroxyphenyl)-alkanen, -oxiden, -sulfiden und -sulfonen, der Formel II, mit Oxethylaten von Tris-(4-hydroxyphenyl)-alkanen der Formel III a oder mit Oxethylaten von 1,3,5-Tris-(4-hydroxyphenyl-isopropyliden)-arylen der Formel III b

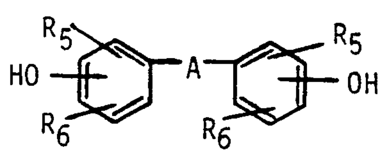

(II)

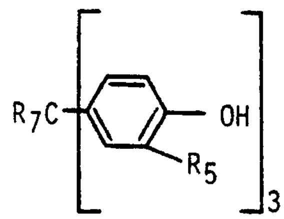

(III a)

mit

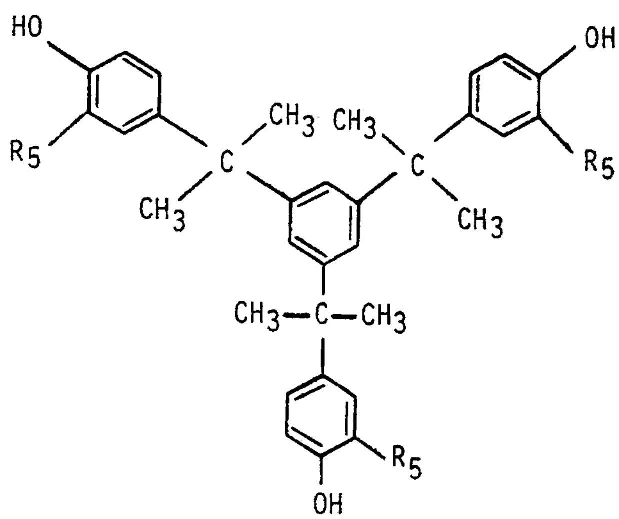

(III b)

A = $-CR_3R_4-$ , $C_2$- bis $C_{12}$-Alkandiyl-, -O-, $-OCH_2CH_2O-$ , -S-, $-SCH_2CH_2S-$, $-SO_2-$, $-SO_2CH_2CH_2SO_2-$, Bis-isopropyliden-arylreste (≙ 1,4- bzw. 1,3-Bis-(1-methyl-ethyl)-arylenreste).

$R_3$, $R_4$ = H, $C_1$- bis $C_8$-Alkyl, Aryl, 4-[(4-Hydroxyphenyl)-isopropyliden]-phenyl (≙ 4-[1-(4-Hydroxyphenyl)-1-methyl-ethyl]-phenyl-), $C_5$- bis $C_{12}$-Cycloalkyl, vorzugsweise Alkyl, jedoch nicht $R_3$ und $R_4$ = $CH_3$, sofern $R_5$ und $R_6$ = H, wobei für $R_3$, $R_4$ = Alkyl diese Substituenten auch zu einem ggf. alkylsubstituierten Ring mit ≦ $C_{12}$-Atomen geschlossen sein können, (d. h. $-CR_3R_4-$ = Cycloalkyliden),

$R_5$, $R_6$ = H, $C_1$- bis $C_4$-Alkyl, $C_5$- bis $C_{12}$-Cycloalkyl, $C_1$- bis $C_4$-Alkoxyl, vorzugszweise H, wobei für $R_5$, $R_6$ ≠ H in Formel II nicht beide Substituenten in o- bzw.o'-Stellung zum phenolischen Hydroxyl stehen dürfen,

$R_7$ = H, $C_1$- bis $C_8$-Alkyl,

wobei die Oxethylate maximal 3 Alkylenoxideinheiten, vorzugsweise Ethylenoxideinheiten, enthalten können, ein Verfahren zu ihrer Herstellung und die Verwendung derartiger Ester zur Stabilisierung von organischen Polymeren, vorzugsweise von Polyolefinen und Polydienen, insbesondere von Polyethylen und Polypropylen.

Es ist bekannt, daß organische Polymere, wie sie durch Polymerisation (bzw. Copolymerisation) von gegebenenfalls funktionelle Gruppen enthaltenden Mono- und Diolefinen oder durch Polykondensation geeigneter Vorstufen - beispielsweise von Diolen mit Dicarbonsäuren - erhalten werden, unter der Einwirkung von Luft/Sauerstoff, von Wärme, von Licht oder von energiereicher Strahlung Veränderungen erleiden können, die die anwendungstechnisch wichtigen Eigenschaften der Polymeren wie Festigkeit, Härte und Dehnung beeinträchtigen. Durch derartige Schädigungen tritt häufig nicht nur eine deutliche Veränderung der meßbaren physikalischen Eigenschaften ein, sondern es kommt zu einer auch visuell bemerkbaren Erweichung, Versprödung und/oder Verfärbung der Fertigteile. Aus diesem Grunde werden den entsprechenden Polymeren vor der Verarbeitung Stabilisatoren zugesetzt. Hinsichtlich näherer Einzelheiten verweisen wir auf die zusammenfassenden Arbeiten von G. Scott, "Atmospheric Oxidation and Antioxidants", Elsevier Publ. Co., Amsterdam, Oxford, New York (1965); R. Gächter, H. Müller, "Taschenbuch der Kunststoff-Additive", C. Hanser-Verlag, München/Wien (1979); J. Pospisil in "Degradation and Stabilization of Polymers", (Edit.: H. Jellinek), Elsevier, Amsterdam, Oxford, New York (1983), Seite 193 ff.; P. P. Klemchuk et al., "Polymer Degradation and Stabilization" 7 (1984), Seite 131 ff..

Es ist auch bekannt, daß als Stabilisatoren bei Polyolefinen vorzugsweise phenolische Hydroxylgruppen enthaltende Verbindungen verwandt werden und daß unter diesen Phenolderivaten Substanzen mit voluminösen Alkylgruppen, vorzugsweise mit tert.-Butylsubstituenten, in mindestens einer ortho-Stellung zur phenolischen Hydroxylgruppe eine besonders gute Wirksamkeit aufweisen. Unter den beschriebenen Stabilisatoren (vgl. z. B. J. C. Johnson, "Antioxidants", Noyes Data Corp. (1975); M. W. Ramsey, "Antioxidants-Recent Developments", Noyes Data Corp. (1979); M. T. Gillies, "Stabilizers for Synthetic Resins", Noyes Data Corp., Park Ridge, N. J. (1983)) sind auch Ester zu finden. Ester von 3,5-Dialkyl-4-hydroxyphenyl-(alkan)-carbonsäuren werden beispielsweise in den US-PSS 4 598 113, 3 681 431, 3 330 859, 3 644 482, 3 285 855, Ester der 4,6-Dialkyl-3-hydroxyphenyl-(alkan)-carbonsäuren in den US-PSS 3 988 363, 3 862 130 und Ester der 2-Methyl-4-tert.-butyl-5-hydroxyphenyl-(alkan)-carbonsäuren in der EP-PS 0 048 841 beschrieben.

Die Wirkung der phenolischen Stabilisatoren läßt sich durch Zusatz bestimmter, meist schwefel- oder phosphorhaltiger Verbindungen häufig noch steigern. Das optimale Mengenverhältnis von Stabilisator und Synergist ist im Einzelfall stets experimentell zu ermitteln. Sowohl für die Stabilisatoren als auch für die Synergisten gilt, daß sie sich ohne Schwierigkeiten unzersetzt in die verschiedenen Polymeren einarbeiten und darin möglichst gleichmäßig verteilen lassen sollten. Andererseits sollte sich das Polymer bei den erforderlichen hohen Einarbeitungstemperaturen weder durch die Zusätze verfärben noch durch die Temperatur- und Scherbeanspruchung einen Molekulargewichtsabbau erleiden.

Aus der Literatur sind verschiedene Verbindungen bekannt, die als Stabilisatoren eingesetzt werden und die neben sterisch abgeschirmten Hydroxyphenylgruppen synergistisch wirkende Schwefelatome im gleichen Molekül enthalten (vgl. z. B. R. W. Layer, "Non-staining Antioxidants" (in G. Scott, "Developments in Polymer Stabilization" 4 (1981), Seite 163 ff., Seite 167); F. X. O'Shea in "Advances Chem. Series" 85 - (1968), Seite 128 ff.; G. Scott in "Developments in Polym. Stabiliz." 6 (1983), Seite 29 ff.). Vor allem Abkömmlinge des ortho-Thiobisphenols sollen zu starker Verfärbung neigen und werden wohl nur zur Stabilisierung von Kautschukmischungen verwandt.

Die Aufgabe der Erfindung bestand darin, ausgehend von an sich bekannten 3-tert.-Butyl- bzw. 3-tert.-Butyl-5-alkyl-4-hydroxyphenyl-(alkan)-carbonsäuren bzw. deren Derivaten, vorzugsweise von 3,5-Di-tert.-butyl-4-hydroxyphenylpropionsäure(derivaten), durch Umsetzung mit ausgewählten, wirtschaftlich herzustellenden, mindestens zwei Hydroxylgruppen und gegebenenfalls Schwefel als Heteroatom enthaltenden Alkoholen zu Estern dieser 3-tert.-Butyl- bzw. 3-tert.-Butyl-5-alkyl-4-hydroxyphenyl-(alkan)-carbonsäuren der Formel I mit verbesserten Stabilisatoreigenschaften zu gelangen und durch Einarbeitung dieser Ester in Polyolefine oder Polydiene, vorzugsweise in Polypropylen und Polyethylen, eine gute Stabilisierung derartiger Polymerer gegen Molekulargewichtsabbau bei der Verarbeitung oder beim Einsatz über längere Zeit zu erreichen, ohne daß eine nennenswerte Verfärbung als Folge des Stabilisatorzusatzes bei diesen Beanspruchungen eintritt.

Die Lösung dieser Aufgabe gelingt überraschend, wenn die leicht zugänglichen Oxethylate von Bis-(4- bzw. 2-hydroxyphenyl)-alkanen, -oxiden, -sulfiden und -sulfonen der Formel II, vorzugsweise von Bis-(4-hydroxyphenyl)-alkanen, -oxiden, -sulfiden und -sulfonen, bzw. Oxethylate von Tris-(4-hydroxyphenyl)-alkanen der Formel IIIa oder von 1,3,5-Tris-(4-hydroxyphenyl-isopropyliden)-arylen der Formel IIIb mit vorzugsweise einer Alkylenoxideinheit pro Hydroxylguppe und besonders bevorzugt mit je einer 2-Hydroxyethoxygruppe anstelle jeder Hydroxylgruppe der Verbindungen der Formeln II bzw. III in die Ester von 3-tert.-Butyl- bzw. 3-tert.-Butyl-5- alkyl-4-hydroxyphenyl-(alkan)-carbonsäuren der Formel I, vorzugsweise solche der 3,5-Di-tert.-butyl-4-hydroxyphenyl-propionsäure, überführt werden und wenn diese, die Poly-(monooxethylate) als Alkoholkomponente enthaltenden Ester zur Stabilisierung der obengenannten Polymeren eingesetzt werden.

Diese Lösung der Aufgabe ist außerordentlich überraschend, da der leichte Angriff von Sauerstoff an den zur Etherbindung benachbarten primären und sekundären Kohlenstoff-Atomen gerade bei Alkyl(en)reste enthaltenden Ethern rasch zur Bildung von Hydroperoxiden führt, die oft bereits bei etwas erhöhten Temperaturen zerfallen und eine sorgfältige Reinigung zur Entfernung solcher Hydroperoxide vor der Verwendung von Ethern erfordern (vgl. Houben-Weyl, "Methoden der organ. Chemie", Band VI/3). Es war daher nicht vorherzusehen, daß mit den erfindungsgemäßen Estern auf der Grundlage von Oxethylaten von Bis-(4- bzw. 2-hydroxyphenyl)-alkanen und von heteroatomhaltigen Analogen bzw. von Tris-(4-hydroxyphenyl)-alkanen oder 1,3,5-Tris-(4-hydroxyphenyl-isopropyliden)-arylen bei den hohen Temperaturen der Polyolefin-Verarbeitung einzumischende Stabilisatoren mit guter Wirksamkeit und überraschend geringer Verfärbung der damit versehenen Polymermaterialien erhalten werden können. Dies überrascht um so mehr, da nach dem Stand der Technik, z.B. nach der US-PS 3 285 855, herstellbare, im Handel erhältliche Ester von (Di-alkyl-4-hydroxyphenyl)-alkan-carbonsäuren mit ethergruppenhaltigen alpha,omega-Bis-hydroxyethyl-(poly)-oxaalkanen der Formel IV

$$HO(CH_2)_n\,(O(CH_2)_m)_pO(CH_2)_l\,OH\ (IV)\ \text{mit}\ m,\ n,\ l\ =\ 2,\ p \geqq 0$$

in Polyolefinen zu Verfärbungen führen, so daß derartige Produkte für dieses wichtige Einsatzgebiet nicht empfohlen werden.

Gleichfalls überraschend ist, daß durch die technisch einfach durchzuführende Oxethylierung der als Vorstufen hochwertiger Kunststoffe verfügbaren Bis-(4-hydroxyphenyl)-alkane und ähnlicher Verbindungen der Formeln II und III (vgl. z. B. Ullmann, "Enzyklopädie der Techn. Chemie", Band 18 (1979), Seite 215 ff.), die i. a. thermisch und noch besser katalytisch leicht in Phenol(e) und Alkenyl-phenole fragmentieren, Alkoholkomponenten erhalten werden, die nach Veresterung mit Carbonsäuren der Formel I auch bei erheblicher thermischer Beanspruchung, wie sie die Einarbeitung in die zu stabilisierenden Polymeren und deren Verarbeitung darstellen, keine Anzeichen von Fragmentierung erkennen lassen. Noch überraschender ist, daß durch die beiden einfachen chemischen Reaktionen der Oxethylierung (d. h. einer Etherbildung) und der Veresterung mit speziellen Carbonsäuren der Formel I hochwirksame Stabilisatoren erhalten werden, deren Wirkung die von bestimmten, vor allem ein oder zwei sperrige ortho-Alkylgruppen tragenden Phenolen nach dem Stand der Technik (vgl. Ullmann, loc. cit., Seite 216 und Band 8, Seite 19 ff.) bei weitem übertrifft, wie in den Beispielen belegt wird. Ganz besonders überraschend ist, daß die erfindungsgemäßen Stabilisatoren auch dann keine Einbuße an Wirksamkeit zeigen, wenn die zu oxethylierenden Bis-(phenole) und Tris-(phenole) der Formeln II und III die für deren erwähnte Stabilisatorwirkung erforderlichen, zur phenolischen Hydroxylgruppe ortho-ständigen Alkylgruppen nicht aufweisen, wodurch die Oxethylierung wesentlich erleichtert wird. Bis-(4-bzw. 2-hydroxyphenyl)-alkane bwz. Cycloalkane der Formel II sowie Tris-(4-hydroxyphenyl)-verbindungen der Formel III sollen im Rahmen der Erfindung als Ausgangsstoffe für die zu veresternden Polyole bevorzugt sein.

Die erfindungsgemäß vorzugsweise in Polypropylen und Polyethylen als Stabilisatoren einzusetzenden Ester sind neue Verbindungen, deren Charakterisierung durch Schmelzpunkte und spektroskopische Untersuchungen den angefügten Beispielen zu entnehmen ist. Solche kristallinen Verbindungen sind gegenüber flüssigen Stabilisatoren bevorzugt, da ihre gleichmäßige Verteilung in Polymeren wie Polyethylen oder Polypropylen und der kontinuierliche Zusatz der notwendigen kleinen Mengen zu Polymerpulvern i. a.

geringere Schwierigkeiten bereiten.

Die Herstellung der erfindungsgemäßen, nicht vorbeschriebenen Ester kann nach an sich bekannten Verfahren durch Umsetzung reaktiver Säuren der Formel I bzw. von deren Derivaten mit den durch Oxethylierung der erwähnten Ausgangsstoffe der Formeln II bzw. III zugänglichen bi- bzw. polyfunktionellen Alkoholen erfolgen. Diese sollten mindestens zwei bzw. drei Alkylenoxideinheiten, vorzugsweise Ethylenoxideinheiten, enthalten, wobei die bei der Oxethylierung gebildeten Etherbrücken von zwei bzw. drei verschiedenen Hydroxylgruppen ausgehen sollten. Zur Oxethylierung können die bekannten Verfahren des Standes der Technik (vgl. z.B. M.J.Schick, "Nonionic Surfactants", Marcel Dekker, New York (1967), Vol I, Seite 57 ff.) angewandt werden, nach denen Alkylenoxide der Formel V

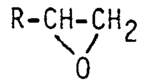

(V) (R = H, $C_1$- bis $C_4$-Alkyl, Aryl)

an die entsprechenden Ausgangsstoffe der Formeln II bzw. III angelagert werden. Anlagerungsprodukte von Ethylenoxid, d.h. R = H in Formel V, sind als Ausgangsmaterialien der erfindungsgemäßen Ester von 3-tert.-Butyl- bzw. 3-tert.-Butyl-5-alkyl-4-hydroxyphenyl-(alkan)-carbonsäuren bevorzugt. Ganz besonders bevorzugte Vorstufen sind Di-(bzw. Poly-)(monooxethylate) von Bis-(4- bzw. 2-hydroxyphenyl)-alkanen, -oxiden, -sulfiden und -sulfonen bzw. von Tris-(4-hydroxyphenyl)-alkanen und -arylen, in denen sämtliche phenolischen Hydroxylgruppen durch die Einwirkung von Ethylenoxid in 2-Hydroxyethylgruppen umgewandelt wurden. Derartige Bis-(bzw. Poly-)(2-hydroxyethoxyaryl)-alkane, -oxide, -sulfide, -sulfone und -aryle sind nicht für alle den Formeln II und III entsprechenden Verbindungen vorbeschrieben. Die Abtrennung der gewünschten Di-(bzw. Poly-)ole von gegebenenfalls bei der Oxethylierung entstandenen Nebenprodukten wie Polyglykolen oder höheren Oxethylaten kann nach bekannten Verfahren des Standes der Technik, d.h. z. B. durch Kristallisation aus geeigneten Lösemitteln (wie Alkoholen oder Ethern) oder durch Säulenchromatographie, erfolgen.

Bevorzugt sind Ester der 3-(3,5-Di-tert.-butyl-4-hydroxyphenyl)-propionsäure der Formel I a

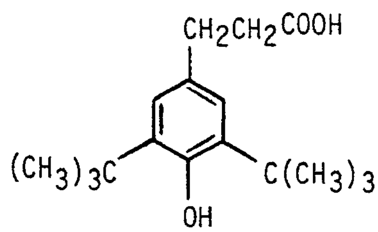

(I a)

mit Oxethylaten von Bis-(4-hydroxyphenyl)-alkanen, -oxiden -sulfiden und -sulfonen der allgemeinen Formel II, vorzugsweise mit A = $-CR_3R_4-$, -O-, -S-, $-SO_2-$ und $R_3$, $R_4$ = H, $CH_3$ (jedoch nicht $R_3$ und $R_4$ = $CH_3$, sofern $R_5$ und $R_6$ = H), Aryl bzw. $-CR_3R_4$ = 1,1-Cyclohexyliden oder 1,1-Cyclododecyliden, sowie mit Oxethylaten von Tris-(4-hydroxyphenyl)-alkanen der Formel IIIa oder von 1,3,5-Tris-(4-hydroxyphenyl-isopropyliden)-arylen der Formel IIIb. Besonders bevorzugt sind Ester mit Oxethylaten von Verbindungen der Formeln II und III, die je eine Ethylenoxideinheit (als 2-Hydroxyethoxygruppe) anstelle der Hydroxylgruppen der Verbindungen der Formeln II und III enthalten, insbesondere Ester mit Bis- bzw. Tris-(monooxethylaten) des alpha,alpha'-Bis-(4-hydroxyphenyl)-p- bzw. m-diisopropylbenzols (d. H. 1,4- bzw. 1,3-Bis-[alpha-(4-hydroxyphenyl]-ispropyliden)benzol oder 1,4- bzw. 1,3-Di-[1-(4-hydroxyphenyl-)-1-methylethyl]-phenylen), des 1,1-Bis-(4-hydroxyphenyl)- bzw. 1.1-Bis-(4-hydroxy-3-tert.-butylphenyl)-cyclohexans, des 1,1-Bis-(4-hydroxyphenyl)-, des 1,1-Bis-(4-hydroxy-3-methylphenyl)- bzw. des 1,1-Bis-(4-hydroxy-3-tert.-butylphenyl)-cyclododecans, des 1,1-Bis-(4-hydroxyphenyl)-1-phenyl-ethans, des 2,2-Bis- (4-hydroxy-3-tert.-butylphenyl)-propans, des Bis-(4-hydroxyphenyl)ethers, des Bis-(4-hydroxyphenyl)-sulfids, des Bis-(4-hydroxyphenyl)sulfons, des Tris-(4-hydroxyphenyl)-methans, des 1,1,1-Tris-(4-hydrophenyl)-ethans und des 1,3,5-Tris-(4-hydroxyphenyl-isopropyliden)- benzols.

Die Herstellung der erfindungsgemäßen Ester ist besonders einfach, wenn die aus Verbindungen der

Formeln II bzw. III herstellbaren Bis-(bzw. Poly-)(monooxethylate) mit Estern der 3-tert.-Butyl- bzw. 3-tert.-Butyl-5-alkyl-4-hydroxyphenyl-(alkan)-carbonsäuren der Formel I, vorzugsweise mit Estern der 3-[3,5-Di-tert.-butyl-4-hydroxyphenyl]-propionsäure, die Alkoxygruppen mit ein bis vier C-Atomen enthalten, unter Freisetzung und Entfernung der leichter flüchtigen Alkohole umgeestert werden. Die Umesterung wird im allgemeinen bei erhöhter Temperatur, vorzugsweise unterhalb von 125 °C, durchgeführt. Die direkte Umsetzung von Diol (bzw. Polyol) und Niedrigalkylester ist häufig der wirtschaftlichste Weg, doch kann auch in Gegenwart inerter Löse-und/oder Schleppmittel zur Abtrennung des freiwerdenden Alkohols gearbeitet werden. Zur Beschleunigung der Umesterung werden (vorzugsweise basische oder neutrale) Katalysatoren nach dem Stand der Technik verwandt, wie z.B. Natriummethylat, Lithiumamid, Kalium-tert.-butylat, Titantetrabutylat, Aluminiumtriisopropylat u.a.. Diese werden im allgemeinen in Mengen von 0,1 bis 5 Gewichtsprozent, bezogen auf das Gewicht des Reaktionsgemisches, zugesetzt, wobei Mengen von 0,5 bis 1,5 Gewichtsprozent aus Gründen der Reaktionsgeschwindigkeit und der Kosten bevorzugt sind.

Zweckmäßigerweise wird die Umesterung unter Inertgas oder bei vermindertem Druck durchgeführt, um Oxidationen von Einsatz- bzw. Umsetzungsprodukten zu vermeiden und um die thermische Belastung des Reaktionsgemisches vor allem in Gegenwart der Umesterungskatalysatoren gering zu halten. Es ist von Vorteil, einen der Einsatzstoffe in 10-bis 20 %-igem molaren Überschuß über die erforderliche stöchiometrische Menge hinaus zu verwenden. Die Umsetzung wird unterbrochen, sobald durch Analyse des Reaktionsgemisches oder durch Wägung des abgetrennten Alkohols weitgehender (bzw. vollständiger) Verbrauch der im Unterschuß eingesetzten Komponente nachgewiesen ist. Dazu wird der Katalysator inaktiviert (d. H. bei basischen oder neutralen Katalysatoren z. B. durch Zusatz einer äquivalenten Säuremenge zerstört), das Reaktionsgemisch aufgearbeitet und die Diol-(bzw. Polyol)-ester durch Umkristallisieren aus geeigneten Lösungsmitteln, wie z. B. Alkoholen, Ethern oder aromatischen Kohlenwasserstoffen, gereinigt. Anschließend wird die Konstitution der Verbindungen $^{1}$H-NMR-spektroskopisch anhand der Lage und Intensität der verschiedenen Signale gesichert.

Die erfindungsgemäßen 3-tert.-Butyl- bzw. 3-tert.-Butyl-5-alkyl-4-hydroxyphenyl-(alkan)-carbonsäureester von Bis- bzw. Poly-[4- bzw. 2-(2'-hydroxyethoxy)-aryl]-alkanen,-oxiden, -sulfiden und -sulfonen bzw. -arylen sind wertvolle Stabilisatoren für Polymere, vorzugsweise für (Co-)Polymerisate von Mono- und/oder Diolefinen, insbesondere von Polypropylen und Polyethylen. Sie können als Verarbeitungsstabilisatoren, aber auch als Langzeitstabilisatoren verwandt werden. Das Einmischen in die Polymeren kann nach bekannten Verfahren des Standes der Technik durch Vermischen der pulverförmigen Polymeren mit den Stabilisatoren oder mit einem Stabilisatorkonzentrat (in dem jeweiligen Polymeren) erfolgen. Der Stabilisatorzusatz kann aber auch in eine Suspension, Emulsion oder Lösung der Polymeren vor der Aufarbeitung eingebracht werden. Die Stabilisatoren werden im allgemeinen in Mengen von 0,02 bis 3 Gewichtsprozent des zu stabilisierenden Materials verwendet, doch schwankt die vom Fachmann leicht zu ermittelnde optimale Menge in Abhängigkeit vom zu stabilisierenden Polymeren und der Art der Beanspruchung. Ein vorteilhafter Bereich liegt zwischen 0,05 und 2 Gewichtsprozent Stabilisatorzusatz, ganz besonders günstig sind bei Polyolefinen Zusätze von 0,1 und 1 Gewichtsprozent. Dabei können wahlweise einzelne Ester, aber auch Gemische mehrerer zugesetzt werden. Ferner können verschiedene weitere Zusatzstoffe, wie z. B. organische schwefel- und/oder phosphorhaltige Verbindungen, als Synergisten, aber auch nicht erfindungsgemäße Stabilisatoren, Weichmacher, Pigmente, UV-Stabilisatoren, Antistatika, Füllstoffe und/oder Verarbeitungshilfsmittel, wie Calciumstearat, zusätzlich in die Polymeren eingearbeitet werden.

Die erfindungsgemäße Stabilisierung von Polymeren, die im Falle der Polyolefine nach dem Spritzguß- bzw. Extrusionsverfahren zu vielseitig verwendbaren Fertigteilen verarbeitet werden können, wird durch die folgenden Beispiele näher erläutert.

Vergleichsbeispiel 1 (nicht erfindungsgemäß)

Herstellung des Di-3-(3,5-di-tert.-butyl-4-hydroxyphenyl)-propionsäureesters des 2,2-Bis-[4'-(2''-hydroxyethoxy)-phenyl]-propans

In einem mit Innenthermometer, Magnetrührer und Liebigkühler ausgerüsteten Dreihalskolben werden 0,3 Mol (95 g) käufliches 2,2-Bis-[4'-(2''-hydroxyethoxy)-phenyl]-propan (Fa. Kodak) mit ca. 0,64 Mol (187 g) 3-(3,5-Di-tert.-butyl-4-hydroxyphenyl)-propionsäuremethylester und mit 0,076 Mol (4,1 g) Natriummethylat versetzt. Unter Inertgas wird das Reaktionsgemisch in der Apparatur unter Feuchtigkeitsausschluß auf 110 °C erhitzt. Nach etwa einer Stunde Reaktionszeit wird der Druck stufenweise bis auf ca. 0,2 hPa (mbar) vermindert. Abdestillierendes Methanol wird kondensiert und zur Abschätzung des erreichten Umsatzes bei der ca. 4 bis 5 Stunden erfordernden Umesterung gewogen. Der Inhalt des Dreihalskolbens wird in ca. 300 ml Toluol aufgenommen, eine dem Natriummethylatkatalysator annähernd äquivalente Menge Eisessig (5 % Überschuß) zugesetzt und die Toluollösung anschließend mit Natriumbicarbonatlösung und Wasser gewaschen. Nach Filtration, Trocknen des Filtrats und Abziehen des Toluols bei vermindertem Druck wird aus dem zähen Destillationsrückstand unumgesetzter bzw. überschüssiger 3-(3,5-Di-tert.-butyl-4-hydroxyphenyl)-propionsäuremethylester (Sdp.ca. 130 °C/0,05 hPa (mbar) im Vakuum abgetrennt. Die nichtflüchtigen Anteile des Reaktionsgemisches bestehen überwiegend aus dem Di-3-(3,5-di-tert.-butyl-4-hydroxyphenyl)-propionsäureester des 2,2-Bis-[4'-(2''-hydroxyethoxy)-phenyl]-propans. Durch Zusatz einer kleinen Menge Tetrahydrofuran läßt sich dieser Ester zur Kristallisation bringen. Das anfallende Rohprodukt wird durch Umkristallisieren aus Ethanol bis zur Schmelzpunktskonstanz gereinigt, die erreichte Reinheit dünnschichtchromatographisch (Abk. TLC) überprüft.

| | |
|---|---|
| Ausbeute | : 123 g Di-ester (= 49 % d. Th.) |
| Schmelzpunkt | : 103,5 bis 105 °C |
| Reinheit | : 98 % (lt. TLC) |

Die Konstitution der Verbindung wird durch Intensität und Lage der Absorptionslinien des $^1$H-NMR-Spektrums bestätigt. (Vgl. Tabelle I, die nähere Einzelheiten über die (mit TMS (Tetramethylsilan) als innerem Standard in $CDCl_3$ aufgenommenen) Spektren der erfindungsgemäßen Ester enthält.)

Beispiele 2 bis 11 (nicht erfindungsgemäß)
Herstellung verschiedener Bis-[4- bzw. 2-(2'-hydroxyethoxy)-phenyl]-alkane, -oxide, -sulfide und -sulfone sowie von Tris-[4-(2'-hydroxyethoxy)-phenyl]-methan und von 1,3,5-Tris-[4-(2'-hydroxyethoxy)-phenyl-isopropyliden]-benzol

Nach bekannten Verfahren zur Oxethylierung von Phenolen (vgl. z. B. M. J. Schick, loc. cit.) werden 1,1-Bis-(4-hydroxyphenyl)-cyclohexan (≙ Bisphenol Z; Beispiel 2), alpha,alpha'-Bis-(4-hydroxyphenyl)-p-diisopropylbenzol (≙ Bis-phenol D; Beispiel 3), 1,1-Bis-(4-hydroxyphenyl)-1-phenyl-ethan (Beispiel 4), Bis-(2-hydroxy-3-cyclohexyl-5-methyl-phenyl)-methan (Beispiel 5), 1,1-Bis-(4-hydroxyphenyl)-cyclododecan (Beispiel 6), Bis-(4-hydroxyphenyl)-ether (Beispiel 7), Bis-(4-hydroxyphenyl)-sulfid (Beispiel 8), Bis-(4-hydroxyphenyl)-sulfon (Beispiel 9), Tris-(4-hydroxyphenyl)-methan (≙ Leukoaurin) (Beispiel 10) und 1,3,5-Tris-(4-hydroxyphenyl-isopropyliden)-benzol (Beispiel 11) in Gegenwart katalytischer Mengen Natriumhydroxid mit Ethylenoxid umgesetzt. Dabei werden Lösungen der Bis- bzw. Tris-(4- bzw. 2-hydroxyphenyl)-verbindungen in Diethylenglykoldimethylether solange unter Druck mit Ethylenoxid zur Reaktion gebracht, bis pro Mol Hydroxylgruppen in den Ausgangsverbindungen je ein Mol Ethylenoxid aufgenommen worden ist. Nach Abkühlen, Neutralisieren des eingesetzten Katalysators mit einer äquivalenten Menge Eisessig und Abziehen des gesamten bzw. eines Teils des Lösungsmittels bilden sich - gegebenenfalls nach längerem Stehen bei 0 °C - kristalline Niederschläge. Die Rohprodukte werden aus geeigneten Lösemitteln, i. a. Methanol, Ethanol oder Ethern, umkristallisiert. In allen Fällen werden farblose Kristalle erhalten, deren Schmelzpunkte in Tabelle II aufgeführt sind, die auch Angaben über Ausbeuten und Lösemittel enthält. Da einzelne dieser Verbindungen nicht vorbeschrieben sind, werden deren Konstitution und Reinheit vor der weiteren Verwendung $^1$H-NMR-spektroskopisch überprüft.

Beispiel 12
Herstellung des Bis-[3-(3,5-di-tert.-butyl-4-hydroxyphenyl)-propionsäure]-esters des 1,1-Bis-[4'-(2''-hydroxyethoxy)-phenyl]-cyclohexans

Nach der im Beispiel 1 beschriebenen Verfahrensweise werden 0,25 Mol (89,1 g) 1,1-Bis-[4'-(2''-hydroxyethoxy)-phenyl]-cyclohexan, das nach Beispiel 2 hergestellt wurde, in Gegenwart von 0,044 Mol (2,35 g) Natriummethylat mit 0,53 Mol (155 g) 3-(3,5-Di-tert.-butyl-4-hydroxyphenyl)-propionsäuremethylester bei 110 °C binnen 6,5 Stunden umgeestert. Nach Aufarbeitung und Entfernen unumgesetzter bzw. überschüssiger Ausgangsmaterialien unter vermindertem Druck wird ein glasartiger Rückstand erhalten. Umkristallisieren aus Butanol liefert den erfindungsgemäßen Bis-ester in hoher Reinheit.

| | |
|---|---|
| Ausbeute | : 156,6 g Bisester (= 71,4 % d. Th.) |
| Schmelzpunkt | : 128 bis 131 °C |
| Reinheit | : ca. 95 % (lt. NMR) |

Die Konstitution der Verbindung wird durch Lage und Intensität der Absorptionslinien des $^1$H-NMR-Spektrums bestätigt. (Einzelheiten vgl. Tabelle I.)

Beispiel 13
Herstellung des Bis-[3-(3,5-di-tert.-butyl-4-hydroxyphenyl)-propionsäure]-esters des alpha,alpha'-Bis-[4-(2'-hydroxyethoxy)-phenyl]-p-diisopropylbenzols

Nach der im Beispiel 1 beschriebenen Verfahrensweise werden 0,21 Mol (91,3 g) des nach Beispiel 3 hergestellten alpha,alpha'-Bis-[4-(2'-hydroxyethoxy)-phenyl]-p-diisopropylbenzols in Gegenwart von 0,076 Mol (4,1 g) Natriummethylat mit 0,45 Mol (131,6g) 3-(3,5-Di-tert.-butyl-4-hydroxyphenyl)-propionsäuremethylester bei 110 °C binnen 8,5 Stunden umgeestert. Nach Aufarbeitung und Entfernung unumgesetzter bzw. überschüssiger Ausgangsmaterialien unter vermindertem Druck wird ein zähes Öl erhalten, das nach Abkühlen auf ≦ 0 °C und Zusatz von etwas Ethanol erstarrt. Umkristallisieren aus Ethanol liefert den erfindungsgemäßen Bis-ester.

Ausbeute : 152,4 g Bis-ester (= 72,8 % d. Th.)
Schmelzpunkt : 127 bis 128 °C
Reinheit : 88 % (lt. TLC)

Die Konstitution des Bis-esters wird durch Lage und Intensität der Absorptionslinien des $^1$H-NMR-Spektrums bestätigt (vgl. Tabelle I).

Beispiel 14

Herstellung des Bis-[3-(3,5-di-tert.-butyl-4-hydroxyphenyl)-propionsäure]-esters des 1,1-Bis-[4'-(2''-hydroxyethoxy)-phenyl]-1-phenylethans

Nach der im Beispiel 1 beschriebenen Verfahrensweise werden 0,23 Mol (87 g) von nach Beispiel 4 erhaltenem 1,1-Bis-[4'-(2''-hydroxyethoxy)-phenyl]-1-phenyl-ethan mit 0,49 Mol (143,3 g) 3-(3,5-Di-tert.-butyl-4-hydroxyphenyl)-propionsäuremethylester bei 115 °C binnen 8 Stunden in Gegenwart von 0,01 Mol (3,5 g) Titantetrabutylat umgeestert. Die analoge Aufarbeitung liefert ein Rohprodukt, aus dem nach Umkristallisieren der erfindungsgemäße Bis-ester erhalten wird.

Ausbeute : 183,6 g Bis-ester (= 88 % d. Th.)
Schmelzpunkt : 83 bis 85 °C (aus Cyclohexan)
Reinheit : ≧ 95 % (lt. NMR)

Die Konstitution des Bis-esters wird durch Lage und Intensität der Absorptionslinien des $^1$H-NMR-Spektrums bestätigt (vgl. Tabelle I).

Beispiel 15

Herstellung des Bis-[3-(3,5-di-tert.-butyl-4-hydroxyphenyl)-propionsäure]-esters des Bis-[2-(2'-hydroxyethoxy)-3-cyclohexyl-5-methyl-phenyl]-methans

Nach Beispiel 5 erhaltenes Bis-[2-(2'-hydroxyethoxy)-3-cyclohexyl-5-methyl-phenyl]-methan (0,2 Mol; 94,9 g) wird nach der in Beispiel 1 beschriebenen Verfahrensweise in Gegenwart von 0,076 Mol (4,1 g) Natriummethylat bei 125 °C binnen 6 Stunden mit 0,43 Mol (125,7 g) 3-(3,5-Di-tert.-butyl-4-hydroxyphenyl)-propionsäuremethylester umgeestert. Nach analoger Aufarbeitung (und Entfernen unumgesetzter bzw. überschüssiger Ausgangsmaterialien) wird eine viskose Masse erhalten, aus der sich nach längerer Zeit ein kristallines Rohprodukt isolieren läßt. Umkristallisieren aus Methanol führt zu dem reinen erfindungsgemäßen Bis-ester.

Ausbeute : 141,1 g (= 71,7 % d. Th.)
Schmelzpunkt : 113 bis 117 °C
Reinheit : 96 % (lt. TLC)

Die Konstitution des Bis-esters wird durch Lage und Intensität der Absorptionslinien des $^1$H-NMR-Spektrums bestätigt (vgl. Tabelle I).

Beispiel 16

Herstellung des Bis-[3-(3,5-di-tert.-butyl-4-hydroxyphenyl)-propionsäure]-esters des 1,1-Bis-[4'-(2''-hydroxyethoxy)-phenyl]-cyclododecans

Nach der im Beispiel 1 beschriebenen Verfahrensweise werden 0,21 Mol (95,5 g) 1,1-Bis-[4'-(2''-hydroxyethoxy)-phenyl]-cyclododecan, das nach (dem nicht erfindungsgemäßen) Beispiel 6 hergestellt wurde, unter Zusatz von 0,01 Mol (3,5 g) Titantetrabutylat binnen 7,5 Stunden bei 125 °C mit 0,45 Mol (131,6 g) 3-(3,5-Di-tert.-butyl-4-hydroxyphenyl)-propionsäuremethylester umgeestert. Nach analoger Aufarbeitung und Entfernen unumgeesterter bzw. überschüssiger Ausgangsmaterialien unter vermindertem Druck wird ein viskoses Produkt erhalten, das beim Abkühlen erstarrt. Der glasartige Rückstand besteht aus dem erfindungsgemäßen Bis-ester.

Ausbeute : 194,8 g Bis-ester (= 95 % d. Th.)
Reinheit ≧ 95 % laut $^1$H-NMR

Schmelzpunkt : 72 bis 78 °C

Die Konstitution der Verbindung wird durch die Lage und Intensität der Signale des $^1$H-NMR-Spektrums bestätigt (vgl. Tabelle I).

Beispiel 17

Herstellung des Bis-[3-(3,5-di-tert.-butyl-4-hydroxyphenyl)-propionsäure]-esters des Bis-[4-(2'-hydroxyethoxy)-phenyl]-ethers

Nach der im Beispiel 1 beschriebenen Verfahrensweise werden 0,45 Mol (129,3 g) Bis-[4-(2'-hydroxyethoxy)-phenyl]-ether, der nach Beispiel 7 erhalten wurde, unter Zusatz von 0,076 Mol (4,1 g) Natriummethylat mit 0,72 Mol (210,5 g) 3-(3,5-Di-tert.-butyl-4-hydroxyphenyl)-propionsäuremethylester bei 110 °C binnen 6 Stunden umgeestert. Die analoge Aufarbeitung liefert nach Entfernen der unumgesetzten bzw. überschüssigen Ausgangsmaterialien unter vermindertem Druck ein zähes Öl. Nach längerem Stehen bei 20 °C und Zusatz von etwas Methyl-tert.-butylether werden Kristalle erhalten, die aus Methanol umkristallisiert werden und aus dem erfindungsgemäßen Bisester bestehen. Dessen Konstitution wird durch $^1$H-NMR-Analyse gesichert (vgl. Tabelle I).

Ausbeute : 104,3 g (= 35,7 % d. Th.)
Schmelzpunkt : 80 bis 81 °C
Reinheit : 97,5 % (lt. TLC)

Beispiel 18

Herstellung des Bis-[3-(3,5-di-tert.-butyl-4-hydroxyphenyl)-propionsäure]-esters des Bis-[4-(2'-hydroxyethoxy)-phenyl]-sulfids

Nach der im Beispiel 1 beschriebenen Verfahrensweise werden 0,24 Mol (73,5 g) Bis-[4-(2'-hydroxyethoxy)-phenyl]-sulfid, die nach Beispiel 8 synthetisiert wurden, in Gegenwart von 0,076 Mol (4,1 g) Natriummethylat mit 0,51 Mol (149,1 g) 3-(3,5-Di-tert.-butyl-4-hydroxyphenyl)-propionsäuremethylester bei 115 °C binnen 5,75 Stunden umgeestert. Aufarbeitung und Entfernen unumgesetzter Ausgangsmaterialien unter vermindertem Druck führen zu einem glasartigen Rückstand. Das Rohprodukt liefert nach Umkristallisieren aus Toluol den erfindungsgemäßen Bis-ester.

Ausbeute : 169,5 g (= 85,4 % d. Th.)
Schmelzpunkt : 80 bis 82 °C
Reinheit : 92 % (lt. TLC)

Die Konstitution des erfindungsgemäßen Bis-esters wird durch Lage und Intensität der Absorptionslinienen des $^1$H-NMR-Spektrums bestätigt. (Einzelheiten vgl. Tabelle I.)

Beispiel 19

Herstellung des Bis-[3-(3,5-di-tert.-butyl-4-hydroxyphenyl)-propionsäure]-esters des Bis-[4-(2'-hydroxyethoxy)-phenyl]-sulfons

Nach der im Beispiel 1 beschriebenen Verfahrensweise werden 0,25 Mol (84,6 g) Bis-[4-(2'-hydroxyethoxy)-phenyl]-sulfon, die nach Beispiel 9 hergestellt wurden, in Gegenwart von 0,076 Mol (4,1 g) Natriummethylat bei 130 bis 140 °C binnen 5,5 Stunden mit 0,53 Mol (155g) 3-(3,5-Di-tert.-butyl-4-hydroxyphenyl)-propionsäuremethylester umgeestert. Eine zum Beispiel 1 analoge Aufarbeitung liefert nach Enfernen der überschüssigen bzw. unumgesetzten Ausgangsmaterialien unter vermindertem Druck ein Öl. Dieses erstarrt nach Zusatz von etwas Methanol und längerem Stehen bei 20 °C. Das Rohprodukt liefert nach Umkristallisieren aus Methanol den erfindungsgemäßen Bis-ester, dessen Konstitution $^1$H-NMR-spektroskopisch gesichert wird (vgl. Tabelle I).

Ausbeute : 139,4 g (= 65 % d. Th.)
Schmelzpunkt : 129 bis 131 °C
Reinheit : 91 % (lt. TLC)

Beispiel 20

Herstellung des Tris-[3-(3,5-di-tert.-butyl-4-hydroxyphenyl)-propionsäure]-esters des Tris-[4-(2'-hydroxyethoxy)-phenyl]-methans

Nach der im Beispiel 1 beschriebenen Verfahrensweise werden 0,17 Mol (72,2 g) Tris-[4-(2'-hydroxyethoxy)-phenyl]-methan, das nach dem nicht erfindungsgemäßen Beispiel 10 hergestellt wurde, in Gegenwart

von 0,01 Mol (3,5 g) Titantetrabutylat bei 120 °C binnen 5 Stunden mit 0,54 Mol (157,9 g) 3-(3,5-Di-tert.-butyl-4-hydroxyphenyl)-propionsäuremethylester umgeestert. Nach analoger Aufarbeitung und Entfernen unumgeesterter bzw. überschüssiger Ausgangsmaterialien unter vermindertem Druck wird eine glasartige Masse erhalten, aus der sich nach Umkristallisieren aus Isopropanol der gewünschte Tris-ester in reinerer Form isolieren läßt. Seine Konstitution wird durch $^1$H-NMR-Analyse gesichert (vgl. Tabelle I).

| | |
|---|---|
| Ausbeute | : 145,8 g (= 71 % d. Th.) |
| Schmelzpunkt | : 53 bis 56 °C |
| Reinheit | : ≧ 95 % (lt. NMR) |

Beispiel 21

Herstellung des Tris-[3-(3,5-di-tert.-butyl-4-hydroxyphenyl)-propionsäure]-esters des 1,3,5-Tris-[1-methyl-1-(4'-(2"-hydroxyethoxy)-phenyl)-ethyl]-benzols (≙ 1,3,5-Tris-[4-(2'-hydroxyethoxy)-phenyl-isopropyliden]-benzol)

Nach der im Beispiel 1 beschriebenen Verfahrensweise werden 0,15 Mol (91,92 g) 1,3,5-Tris-[1-methyl-1-(4'-(2"-hydroxyethoxy)-phenyl)-ethyl]-benzol, das nach Beispiel 11 hergestellt wurde, in Gegenwart von 0,01 Mol (3,5 g) Titantetrabutylat mit 0,48 Mol (131,59 g) 3-(3,5-Di-tert.-butyl-4-hydroxyphenyl)-propionsäuremethylester binnen 10 Stunden umgeestert. Nach Aufarbeitung und Entfernen unumgeesterter bzw. überschüssiger Ausgangsmaterialien unter vermindertem Druck bleibt ein zähes Öl zurück, das beim Abkühlen erstarrt. Die glasartige, pulverisierbare Masse besteht aus dem erfindungsgemäßen Tris-ester. Dessen Konstitution wird durch das $^1$H-NMR-Spektrum bestätigt. (Vgl. Tabelle I hinsichtlich näherer Einzelheiten.)

| | |
|---|---|
| Ausbeute | : 193 g (= 92,3 % d. Th.) |
| Schmelzpunkt | : 58 bis 61 °C |
| Reinheit | : ca. 95 % (lt. $^1$H-NMR) |

Beispiele 22 bis 32

Stabilisierung von Polypropylen mit erfindungsgemäßen Stabilisatoren (Beispiele 22 bis 27) und Stabilisatoren nach dem Stand der Technik (Vergleichsversuche Beispiele 28 bis 32)

2 kg Polypropylen-Pulver werden mit den in Tabelle III angegebenen Mengen an Stabilisator (erfindungsgemäße Ester in den Beispielen 22 bis 27 bzw. Stabilisatoren nach dem Stand der Technik in den Beipielen 28 bis 32), an Calciumstearat als Verarbeitungshilfsmittel sowie an Bis-(octadecyl)-thiodipropionsäureester und gegebenenfalls an Tris-(2,4-di-tert.-butylphenyl)-phosphit versetzt und in einem Mischaggregat (z. B. Fluid-Mischer der Fa. Papenmeier) bei Raumtemperatur kurze Zeit (ca. 1 Minute) vermischt. Die erhaltenen Pulvermischungen werden bei 100 Upm und maximal 230 °C mit einem Extruder (Fa. Tröster, d = 30 mm, l = 20 d) extrudiert und anschließend granuliert. Das Granulat wird bei 210 °C zu 1 mm dicken Platten verpreßt und aus diesen Polyolefinstreifen mit den Maßen 1 × 10 × 100 mm gestanzt. Letztere werden in einer geeigneten Vorrichtung bei 145 °C freistehend in einem Umlufttrockenschrank unter Luftzutritt solange gelagert, bis als Zeichen eintretender Versprödung ein Zerbröseln der Prüfkörper bzw. Rißbildung an diesen zu beobachten ist. Tabelle III enthält die Ergebnisse.

An der bei 145 °C ermittelten Beständigkeit stabilisierter Polypropylenproben erkennt man, daß die Wirkung der erfindungsgemäß einzuarbeitenden Ester das Niveau von Proben erreicht oder übertrifft, bei denen Stabilisatoren nach dem Stand der Technik zugesetzt wurden.

Beispiele 33 bis 39

Prüfung auf Farbveränderungen bei stabilisierten Polypropylenproben

Einige der nach den Beispielen 22 bis 27 mit erfindungsgemäßen Stabilisatoren und gegebenenfalls weiteren Zusätzen versehenen Polypropylengranulate werden bei 210 °C zu Platten (Maße 4 × 10 × 100 mm) verpreßt. Diese werden nach 4wöchiger Lagerung bei 100 °C hinsichtlich eventueller Farbänderungen gegenüber thermisch nicht belasteten Mustern und im Vergleich zu analog bei 100 °C gealterten Proben mit nicht erfindungemäßen Stabilisatoren (Beispiele 37 bis 39) beurteilt. Die folgende Tabelle IV enthält visuell ermittelte Farbeindrücke, die auf analog gealterte Vergleichsproben mit den Tetra- bzw. Di-[3-(3,5-di-tert.-butyl-4-hydroxyphenyl)-propionsäure]-estern des Pentaerythrits (Beispiel 38, hergestellt nach Beispiel 31), des 2,2-Bis-[4'-(2"-hydroxyethoxy)-phenyl]-propans (Beispiel 37, hergestellt nach Beispiel 28) bzw. des Thiodiethanols (Beispiel 39, hergestellt nach Beispiel 32) bezogen werden.

Man erkennt an den in den Tabellen III und IV wiedergegebenen Prüfergebnissen, daß mit der

erfindungsgemäßen Stabilisierung Vorteile gegenüber dem Stand der Technik zu erreichen sind, da bei ähnlicher Langzeitstabilisierung zum Teil geringere Farbänderungen als mit Stabilisatoren nach dem Stand der Technik zu beobachten sind.

Beispiele 40 bis 45 (Beispiele 44 und 45 nicht erfindungsgemäß)

Nach den Beispielen 22, 23, 25 und 27 sowie 28 und 31 hergestelltes stabilisiertes Polypropylenpulver wird auf einem Extruder (Fa. Brabender; d = 19 mm, 1 = 20 d) mehrfach (bei 30 Upm und bei einer Temperatur von maximal 270 °C) extrudiert. Die Eignung der verwendeten Stabilisatoren als Verarbeitungsstabilisatoren wird anhand der bei 190 °C ermittelten $I_5$-Werte geprüft, an denen das Ausmaß eines eintretenden Molekulargewichtsabbaus erkennbar ist. Tabelle V enthält die gemessenen Werte, die die Auswirkungen der Mehrfachextrusion bei Anwesenheit der erfindungsgemäßen Stabilisatoren (nach den Beispielen 12, 13, 17 und 19) bzw. zweier Stabilisatoren nach dem Stand der Technik (Bis-bzw. Tetra-[3-(3′,5′-di-tert.-butyl-4′-hydroxyphenyl)-propionsäure]-ester des 2,2-Bis-[4′-(2″-hydroxyethoxy)-phenyl]-propans (Beispiel 44) und des Pentaerythrits (Beispiel 45) wiedergeben.

Man erkennt, daß mit den erfindungsgemäßen Stabilisatoren der Stand der Technik in den meisten Fällen erreicht wird, vor allem, wenn geringe Mengen an Synergisten zugesetzt werden.

Beispiele 46 bis 50 (Beispiele 48 bis 50 nicht erfindungsgemäß)

In ähnlicher Weise wie in den Beispielen 24, 26, 29 und 31 mit jeweils 0,1 Gewichtsprozent an Stabilisator und 0,1 Gewichtsprozent an Calciumstearat sowie gegebenenfalls zusätzlich mit 0,1 Gewichtsprozent Bis-(octadecyl)-thiodipropionsäureester (Abk. S) und mit 0,1 Gewichtsprozent Tris-(2,4-di-tert.-butylphenyl)-phosphit (Abk. P) stabilisiertes Polypropylenpulver wird bei maximal 270 °C auf einem Extrusimeter (Fa. Göpfert; d = 20 mm, l = 20 d; 30 Upm; Gangtiefenverhältnis 1 : 3) mehrfach extrudiert. Die an den erhaltenen Granulaten bei 190 °C gemessenen $I_5$-Werte sind in Tabelle VI zusammengestellt.

Man erkennt auch bei dieser Versuchsreihe, daß die erfindungsgemäßen Stabilisatoren (nach den Beispielen 15 und 18) vor allem in Gegenwart von Synergisten eine ebenso gute Verarbeitungsstabilität des Polypropylens bewirken wie die (in den Beispielen 48 und 49 verwendeten) Stabilisatoren nach dem Stand der Technik (Beispiel 48: Octadecylester der 3-(3,5-Di-tert.-butyl-4-hydroxyphenyl)-propionsäure; Beispiel 49: Tetraester der gleichen Säure des Pentaerythrits). Als Kontrollprobe extrudiertes unstabilisiertes Polypropylen (vgl. Beispiel 50) zeigt einen wesentlich größeren Molekulargewichtsabbau als alle stabilisierten Proben.

Beispiele 51 bis 54 (Beispiele 53 und 54 nicht erfindungsgemäß)

Unterwirft man analog den Beispielen 24, 26, 29 und 31 hergestellte und stabilisierte Polyethylenproben analog zu den Beispielen 33 bis 39 einer 28tägigen Alterung bei 100 °C und einer anschließenden visuellen Beurteilung eventueller Farbänderungen, so ist das erfindungsgemäß stabilisierte Muster nach Beispiel 24 ebenso gut zu bewerten wie die Proben 29 und 31 nach dem Stand der Technik, während die erfindungsgemäße Probe 26, die einen schwefelhaltigen Stabilisator enthält, nicht ganz das Niveau der anderen Proben erreicht. (Bewertungen vgl. Tabelle VI.)

Tabelle I

$^1$H-NMR-Spektren von 3-(3,5-Di-tert.-butyl-4-hydroxyphenyl)-propionsäureestern von Oxethylaten verschiedener Bis- bzw. Tris-(hydroxyphenyl)-alkane, -oxide, -sulfide, -sulfone und -aryle

| Ester nach Bsp. Nr. | Resonanzlinien der $^1$H-NMR-Spektren* (in ppm) (Zuordnung laut Strukturformel** der erfindungsgemäßen Ester) | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| 1 | 7,04 | 5,11 | 4,46 | 4,17 | 2,91 | 2,66 | 1,44 | 7,13 | 6,86 | | | | 1,65 |
| | ( 4) | ( 2) | ( 4) | ( 4) | ( 4) | ( 4) | (36) | ( 4) | ( 4) | | | | ( 6) |
| 12 | 6,99 | 5,07 | 4,41 | 4,12 | 2,87 | 2,63 | 1,4-1,5 | 7,16 | 6,80 | | | | 2,20 1,4-1,5 |
| | ( 4) | ( 2) | ( 4) | ( 4) | ( 4) | ( 4) | (36) | ( 4) | ( 4) | | | | ( 4) ( 6) |
| 13 | 7,00 | 5,07 | 4,42 | 4,13 | 2,86 | 2,63 | 1,42 | 7,15 | 6,80 | | | | 7,08+1,62 |
| | ( 4) | ( 2) | ( 4) | ( 4) | ( 4) | ( 4) | (36) | ( 4) | ( 4) | | | | ( 4) (12) |
| 14 | 7,00 | 5,08 | 4,43 | 4,14 | 2,88 | 2,65 | 1,43 | 7,00 | 6,80 | | | | 7,23+7,07+2,13 |
| | ( 4) | ( 2) | ( 4) | ( 4) | ( 4) | ( 4) | (36) | ( 4) | ( 4) | | | | ( 3) ( 2) ( 3) |
| 15 | 6,98 | 5,06 | 4,37 | 3,87 | 2,90 | 2,67 | 1,2-1,9 | 6,90 | 6,69 | 2,90 | 2,22 | 1,2-1,9 | 4,00 |
| | ( 4) | ( 2) | ( 4) | ( 4) | ( 4) | ( 4) | (36) | ( 2) | ( 2) | ( 2) | ( 6) | (20) | ( 2) |
| 16 | 7,00 | 5,07 | 4,42 | 4,13 | 2,88 | 2,64 | 1,42 | 7,06 | 6,78 | | | | 2,00 + 0,8-1,5 |
| | ( 4) | ( 2) | ( 4) | ( 4) | ( 4) | ( 4) | (36) | ( 4) | ( 4) | | | | ( 4) (18) |
| 17 | 7,00 | 5,09 | 4,41 | 4,10 | 2,88 | 2,65 | 1,41 | 6,90 | 6,84 | | | | |
| | ( 4) | ( 2) | ( 4) | ( 4) | ( 4) | ( 4) | (36) | ( 4) | ( 4) | | | | |
| 18 | 6,99 | 5,07 | 4,40 | 4,11 | 2,87 | 2,64 | 1,42 | 7,24 | 6,82 | | | | |
| | ( 4) | ( 2) | ( 4) | ( 4) | ( 4) | ( 4) | (36) | ( 4) | ( 4) | | | | |
| 19 | 6,96 | 5,07 | 4,41 | 4,17 | 2,87 | 2,63 | 1,41 | 7,83 | 6,93 | | | | |
| | ( 4) | ( 2) | ( 4) | ( 4) | ( 4) | ( 4) | (36) | ( 4) | ( 4) | | | | |

Tabelle I - Fortsetzung

| Ester nach Bsp. Nr. | Resonanzlinien der $^{1}$H-NMR-Spektren* (in ppm) (Zuordnung laut Strukturformel** der erfindungsgemäßen Ester) ① | ② | ③ | ④ | ⑤ | ⑥ | ⑦ | ⑧ | ⑨ | ⑩ | ⑪ | ⑫ | ⑬ |
|---|---|---|---|---|---|---|---|---|---|---|---|---|---|
| 20 | 7,00 | 5,07 | 4,42 | 4,13 | 2,88 | 2,65 | 1,42 | 7,00 | 6,82 | | | | 5,39 |
| | ( 6) | ( 3) | ( 6) | ( 6) | ( 6) | ( 6) | (54) | ( 6) | ( 6) | | | | ( 1) |
| 21 | 7,01 | 5,09 | 4,43 | 4,14 | 2,90 | 2,66 | 1,43 | 7,04 | 6,76 | | | | 6,90+1,56 |
| | ( 6) | ( 3) | ( 6) | ( 6) | ( 6) | ( 6) | (54) | ( 6) | ( 6) | | | | ( 3) (18) |
| 61 | 6,87 | 4,9 | 4,4 | 4,1 | 2,8 | 2,6 | 1,4 | 6,82 | 6,75 | 6,54 | 2,1 | | 0,7 -2,0 |
| | ( 4) | ( 2) | ( 4) | ( 4) | ( 4) | ( 4) | (36) | ( 2) | ( 2) | ( 2) | ( 6) | | (22) |
| 62 | 7,00 | 5,10 | 4,50 | 4,20 | 2,90 | 2,60 | 1,40 | 7,2 | 7,0 | 6,70 | 1,30 | | 0,8 -2,1 |
| | ( 4) | ( 2) | ( 4) | ( 4) | ( 4) | ( 4) | (36) | ( 2) | ( 2) | ( 2) | (18) | | (22) |
| 63 | 6,98 | 5,06 | 4,48 | 4,15 | 2,88 | 2,62 | 1,42 | 7,20 | 6,98 | 6,72 | 1,35 | | 2,23 + 1,1-1,8 |
| | ( 4) | ( 2) | ( 4) | ( 4) | ( 4) | ( 4) | (36) | ( 2) | ( 2) | ( 2) | (18) | | ( 4) ( 6) |
| 64 | 6,98 | 5,08 | 4,49 | 4,17 | 2,88 | 2,62 | 1,42 | 7,16 | 7,02 | 6,71 | 1,33 | | 1,65 |
| | ( 4) | ( 2) | ( 4) | ( 4) | ( 4) | ( 4) | (36) | ( 2) | ( 2) | ( 2) | (18) | | ( 6) |
| 65 | 6,88 | 4,9 | 4,3 | 4,0 | 2,8 | 2,6 | 1,4 | 7,0 | 6,66 | | | | 6,8-7,0 + 1,6 |
| | ( 4) | ( 2) | ( 4) | ( 4) | ( 4) | ( 4) | (36) | ( 4) | ( 4) | | | | ( 4) (12) |
| 66 | 7,00 | 5,08 | 4,41 | 4,12 | 2,88 | 2,65 | 1,42 | 6,98 | | 6,79 | | | 2,09 |
| | ( 6) | ( 3) | ( 6) | ( 6) | ( 6) | ( 6) | (54) | ( 6) | | ( 6) | | | ( 3) |

Erläuterungen: * gemessen in $CDCl_3$ gegen TMS (intern), Konzentration ca. 20 Volumenprozent; angegeben sind die Signallagen in ppm (mit TMS = 0 ppm) und die Anzahl der zugehörigen H-Atome (jeweils in Klammern)

** Zuordnung der Signale

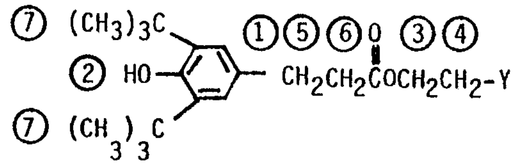

mit Y = 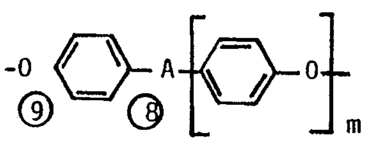 bzw. 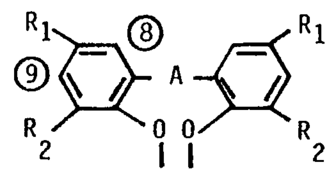 bzw. 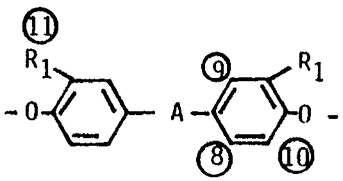

mit m = 1 oder 2

(11) $R_1 = CH_3; C(CH_3)_3$

(10) (12) $R_2$ = 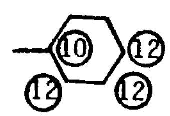

(13) A = 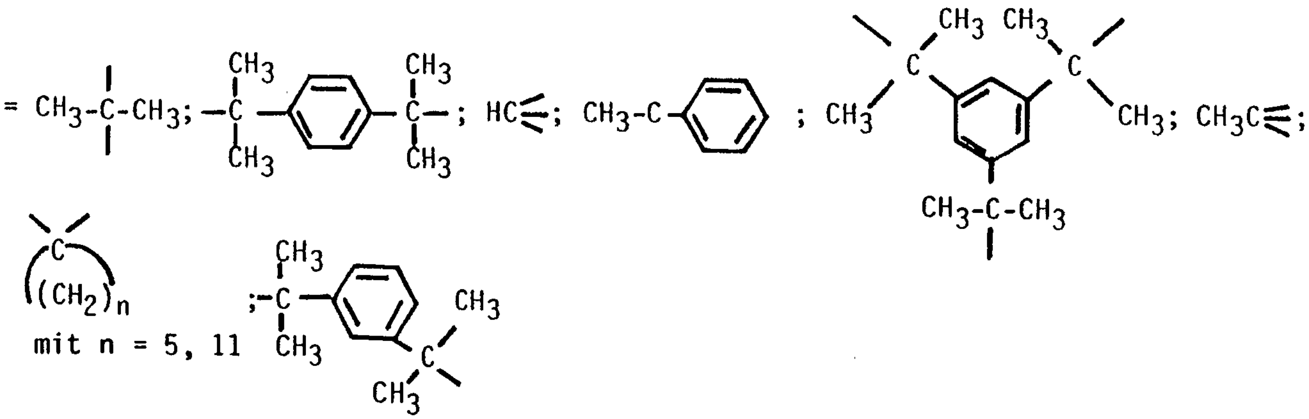

mit n = 5, 11

Tabelle II

Synthetisierte Tris- bzw. Bis-[4- bzw. 2-(2'-hydroxyethoxy)-phenyl]-verbindungen (nicht erfindungsgemäß)

| Ausgangsprodukt nach Bsp. Nr. | Formel des Ausgangsproduktes | Bis- bzw. Tris-(monooxethylat) Ausbeute (% d. Th.) | Schmelzpunkt (°C) | Lösemittel zur Umkristallisation |
|---|---|---|---|---|
| 1 | 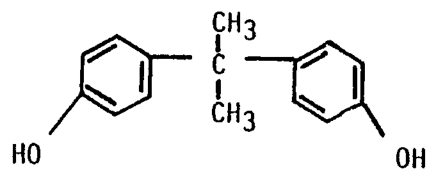 | 65 | 108 -109,5 | Diglyme |
| 2 | 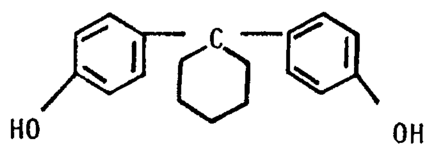 | 65 | 99,5-101 | Ethanol |
| 3 | 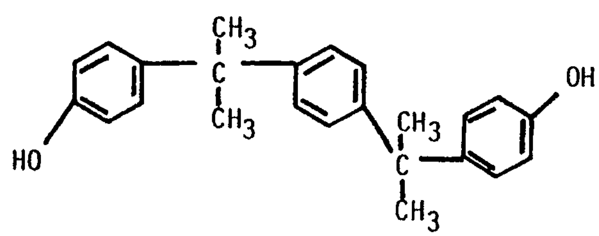 | 44 | 104 -105 | Methanol |

Tabelle II - Fortsetzung

| Ausgangsprodukt nach Bsp. Nr. | Formel des Ausgangsproduktes | Bis- bzw. Tris-(monooxethylat) | | |
|---|---|---|---|---|
| | | Ausbeute (% d. Th.) | Schmelzpunkt (°C) | Lösemittel zur Umkristallisation |
| 4 | 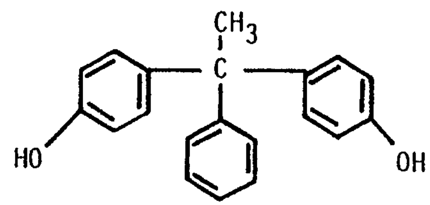 | 80 | 58 - 60 | Ethanol |
| 5 | 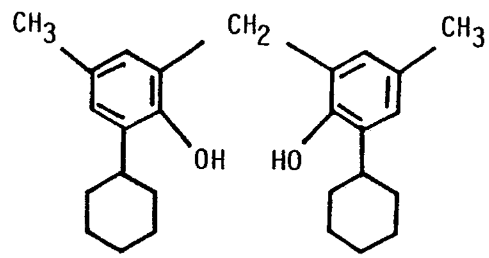 | 62 | 155 -156 | Ethanol |
| 6 | 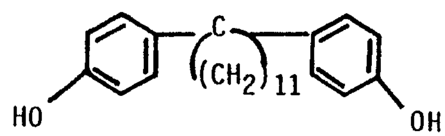 | 65 | 124,5-126 | Methanol |
| 7 | 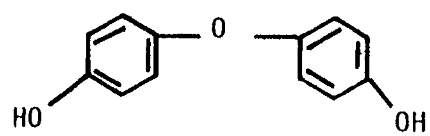 | 69 | 134 -136 | Methanol |

Tabelle II - Fortsetzung

| Ausgangsprodukt nach Bsp. Nr. | Formel des Ausgangsproduktes | Bis- bzw. Tris-(monooxethylat) Ausbeute (% d. Th.) | Schmelzpunkt (°C) | Lösemittel zur Umkristallisation |
|---|---|---|---|---|
| 8 | 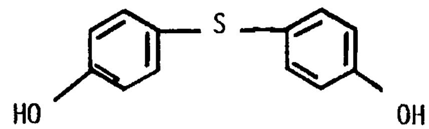 | 65 | 103 -104 | Ethanol |
| 9 | 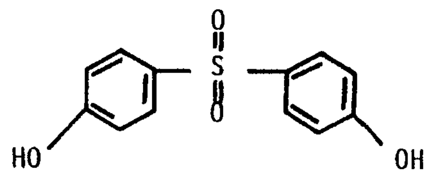 | 55 | 178 -179 | Tetrahydrofuran |
| 10 | 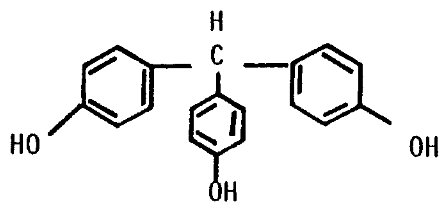 | 51 | 109 -111 | Methanol |

Tabelle II - Fortsetzung

| Ausgangsprodukt nach Bsp. Nr. | Formel des Ausgangsproduktes | Bis- bzw. Tris-(monooxethylat) | | |
|---|---|---|---|---|
| | | Ausbeute (% d. Th.) | Schmelzpunkt (°C) | Lösemittel zur Umkristallisation |
| 11 | 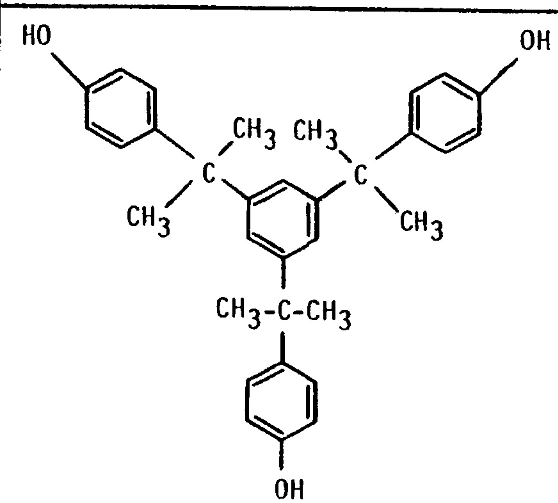 | 79 | 79 - 82 | Petrolether/ Methanol |

<u>Tabelle III</u>

Alterungsversuche bei 145 °C unter Zusatz erfindungsgemäßer Stabilisatoren zu Polypropylen

| Bsp. Nr. | Stabilisator nach Bsp. Nr. | Formel der Stabilisatoren | Alterung bei 145 °C (Tage) | | |
|---|---|---|---|---|---|
| | | | A* | B* | C* |
| 22 | 12 | 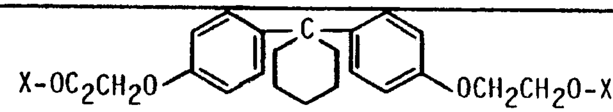 | 36 | 73 | 78 |
| 23 | 13 | 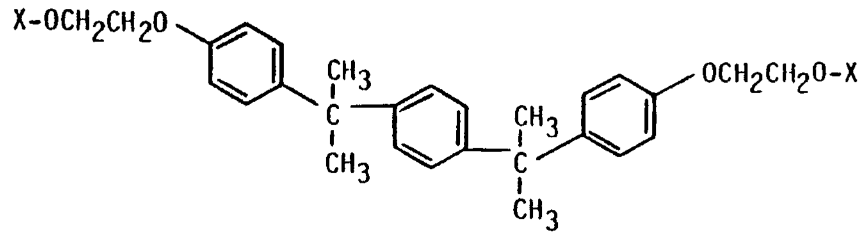 | 44 | 79 | 82 |
| 24 | 15 | 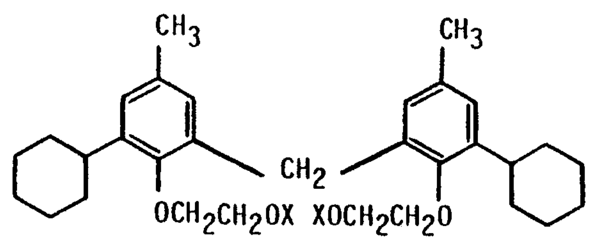 | 35 | 72 | 78 |
| 25 | 17 | 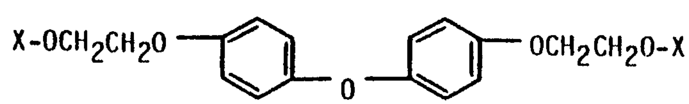 | 39 | 70 | 77 |

Tabelle III - Fortsetzung

| Bsp. Nr. | Stabilisator nach Bsp. Nr. | Formel der Stabilisatoren | Alterung bei 145 °C (Tage) A* | B* | C* |
|---|---|---|---|---|---|
| 26 | 18 | 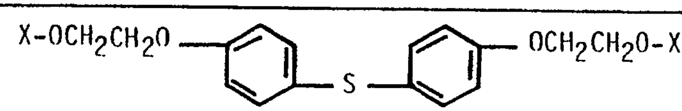 | 36 | 69 | 76 |
| 27 | 19 | 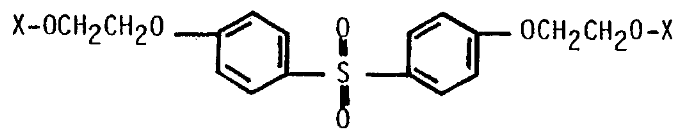 | 30 | 31 | 28 |
| 28 | 1 Vergleichsversuche mit Stabilisatoren nach dem Stand der Technik | 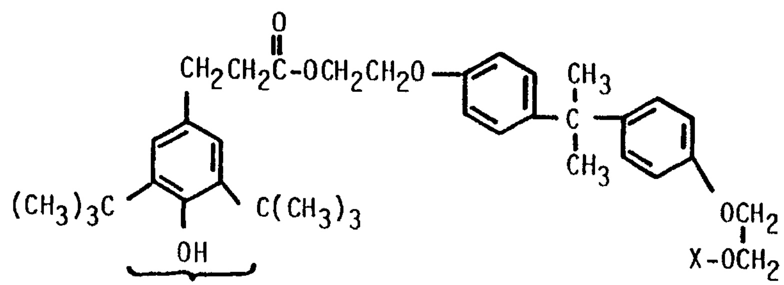 Abk. = X | 35 | 72 | 76 |
| 29 | | $CH_3(CH_2)_{17}$-O-X | 5 | 11 | 12 |

Tabelle III - Fortsetzung

| Bsp. Nr. | Stabilisator nach Bsp. Nr. | Formel der Stabilisatoren | Alterung bei 145 °C (Tage) A* | B* | C* |
|---|---|---|---|---|---|
| 30 | Vergleichsversuche mit Stabilisatoren nach dem Stand der Technik | 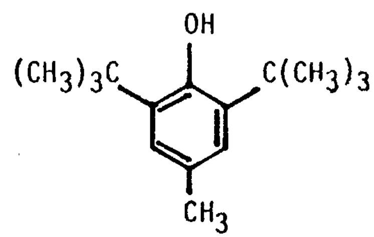 | 2 | 7 | 8 |
| 31 | | $C-(CH_2O-X)_4$ | 49 | 76 | 81 |
| 32 | | $X-OCH_2CH_2SCH_2CH_2O-X$ | 13 | 18 | 29 |

* Abkürzungen: A = 0,1 Gewichtsprozent Stabilisatorzusatz

B = wie A und zusätzlich 0,1 Gewichtsprozent Bis-(octadecyl)-thiodipropionsäureester

C = wie B und zusätzlich 0,1 Gewichtsprozent Tris-(2,4-di-tert.-butylphenyl)-phosphit

X = 3-(3,5-Di-tert.-butyl-4-hydroxyphenyl)-propionsäurerest

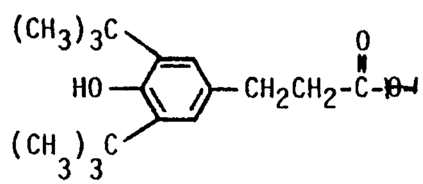

Tabelle IV

Visuell ermittelte Farbeindrücke nach vierwöchiger Alterung von Polypropylenproben bei 100 °C

| Bsp. Nr. | Stabilisator (stabilisiertes Polymer nach Bsp.) | Farbeindruck** (bezogen auf Bsp. Nr. 38) Muster hergestellt unter Zusatz von | | |
|---|---|---|---|---|
| | | A* | B* | C* |
| 33 | 12 (22) | 0 | 0 | - |
| 34 | 13 (23) | + | 0 | 0 |
| 35 | 17 (25) | 0 | - | (-) |
| 36 | 19 (27) | -- | -- | - |
| 37 | 1 (28) | (-) | 0 | 0 |
| 38 | Stand (31) | 0 | 0 | 0 |
| 39 | der (32) Tech. | -- | -- | -- |

* A = 0,1 Gewichtsprozent Antioxidanszusatz

* B = wie A und zusätzlich 0,1 Gewichtsprozent Bis-(octadecyl)-thiodipropionsäureester

* C = wie B und zusätzlich 0,1 Gewichtsprozent Tris-(2,4-di-tert.-butylphenyl)-phosphit

** Angaben jeweils bezogen auf die Vergleichsversuche nach Beispiel 38 mit gleichem Additivzusatz

0 : ebenso gut wie nach Beispiel 38
(+): etwas besser als nach Beispiel 38
\+ : besser als nach Beispiel 38
++ : wesentlich besser als nach Beispiel 38
(-): etwas schlechter als nach Beispiel 38
\- : schlechter als nach Beispiel 38
-- : wesentlich schlechter als nach Beispiel 38

Tabelle V

Mehrfachextrusion stabilisierter Polypropylenproben (Extruder Fa. Brabender)

| Bsp. Nr. | Polypropylen nach Bsp. Nr. | Zusätze an Synergisten | | MFI-Werte (g/10 min) nach Mehrfachextrusion 0x | 1x | 2x | 3x | 4x |
|---|---|---|---|---|---|---|---|---|
| 40 | 22 | — | A)* | 4,1 | 19 | 33 | 48 | 65 |
| | | S* | B)* | 4,2 | 12 | 20 | 31 | 45 |
| | | S+P* | C)* | 3,6 | 6,7 | 8,8 | 12 | 16 |
| 41 | 23 | — | A) | 4,1 | 14 | 23 | 31 | 40 |
| | | S | B) | 4,1 | 12 | 20 | 29 | 42 |
| | | S+P | C) | 2,9 | 6,7 | 8,9 | 12 | 17 |
| 42 | 25 | — | A) | 3,9 | 13 | 21 | 28 | 38 |
| | | S | B) | 4,7 | 12 | 20 | 29 | 44 |
| | | S+P | C) | 3,8 | 6,7 | 9,3 | 13 | 16 |
| 43 | 27 | — | A) | 4,2 | 13 | 20 | 27 | 42 |
| | | S | B) | 3,9 | 10 | 16 | 24 | 38 |
| | | S+P | C) | 3,3 | 6,7 | 9,6 | 13 | 17 |
| 44 | 28 | — | A) | 4,2 | 13 | 20 | 28 | 33 |
| | (Stand der | S | B) | 3,8 | 14 | 20 | 30 | 43 |
| | Technik) | S+P | C) | 3,7 | 6 | 9 | 12 | 16 |
| 45 | 31 | — | A) | 4,0 | 12 | 16 | 19 | 24 |
| | (Stand der | S | B) | 4,1 | 10 | 17 | 28 | 38 |
| | Technik) | S+P | C) | 3,6 | 6,4 | 9,3 | 12 | 16 |

Erläuterungen zu Tabelle V

* Abkürzungen: A = 0,1 Gewichtsprozent Stabilisator

B = 0,1 Gewichtsprozent Stabilisator und zusätzlich 0,1 Gewichtsprozent Bis-(octadecyl)-thiodipropionsäureester (Abk. S)

C = wie B und zusätzlich 0,1 Gewichtsprozent Tris-(2,4-di-tert.-butylphenyl)-phosphit (Abk. P)

Tabelle VI

Mehrfachextrusion stabilisierter Polypropylenproben (Extruder Fa. Göpfert) und Verfärbung analog stabilisierter Polyethylenproben nach Alterung bei 100 °C (28 Tage)

| Bsp. Nr. | Polypropylen (Polyethylen) nach Bsp. Nr. | Zusätze an Synergisten | | MFI-Werte (g/10 min) nach Mehrfachextrusion | | | | | | Bewertung der Verfärbung** nach 28 Tagen |
|---|---|---|---|---|---|---|---|---|---|---|
| | | | | 0x | 1x | 2x | 3x | 4x | 5x | |
| 46 | 24 | — | A)* | 3,3 | 7,7 | 11,7 | 17,3 | 22,1 | 28,3 | 0 |
| (51) | | S+P* | C)* | 3,0 | 4,0 | 5,0 | 5,7 | 6,8 | 8,0 | |
| 47 | 26 | — | A) | 3,3 | 8,4 | 13,8 | 19,8 | 26,7 | 33,4 | - |
| (52) | | S+P | C) | 3,1 | 4,1 | 5,2 | 6,0 | 6,9 | 8,2 | |
| (Stand der Technik) | | | | | | | | | | |
| 48 | 29 | — | A) | 3,7 | 11,2 | 18,9 | 27,4 | 37,8 | 52,4 | 0 |
| (53) | | S+P | C) | 3,0 | 3,9 | 5,3 | 6,3 | 7,7 | 9,3 | |
| 49 | 31 | — | A) | 3,1 | 6,7 | 9,5 | 12,7 | 17,6 | 20,4 | 0 |
| (54) | | S+P | C) | 3,2 | 3,9 | 4,4 | 5,3 | 6,2 | 6,9 | |
| 50 | unstabilisierte Kontrollprobe | — | | 5,2 | 26,2 | 56 | 140 | | | |

Erläuterungen zu Tabelle VI

* Abkürzungen: A = 0,1 Gewichtsprozent Stabilisator

B = wie A und zusätzlich 0,1 Gewichtsprozent Tris-(2,4-di-tert.-butylphenyl)-phosphit (Abk. P) und 0,1 Gewichtsprozent Bis-(octadecyl)-thiodipropionsäureester (Abk. S)

** Bewertung der Verfärbung gealterter stabilisierter Polyethylenproben, vgl. Tabelle IV hinsichtlich der Abstufungen

Beispiele 55 bis 60 (nicht erfindungsgemäß)

Herstellung verschiedener Bis- bzw. Tris-(4-(2'-hydroxyethoxy-)phenyl-)verbindungen

Analog zu Beispiel 2 bis 11 werden 1,1-Bis-(4-hydroxy-3-methyl-phenyl-)cyclododecan (Beispiel 55), 1,1-Bis-(4-hydroxy-3-tert.butyl-phenyl-)cycododecan (Beispiel 56), 1,1-Bis-(4-hydroxy-3-tert.phenyl-

)cyclohexan (Beispiel 57), 2,2-Bis-(4-hydroxy-3-tert.butyl-phenyl)propan (Beispiel 58), alpha,alpha'-Bis-(4-hydroxyphenyl-)-m-diisopropylbenzol (Beispiel 59) und 1,1,1-Tris-(4-hydroxyphenyl-)ethan (Beispiel 60) durch Oxethylierung in die entsprechenden Bis- bzw. Tris-(monooxethylate) (d. H. Bis- bzw. Tris-(4-(2'-hydroxyethoxy-)phenyl-)verbindungen) überführt. Die Konstitution dieser bi- bzw. trifunktionellen Alkohole wird durch die Lage und Intensität der Resonanzlinien der $^1$H-NMR-Spektren bestätigt. Die Verbindungen weisen, ggf. nach Umkristallisieren aus Ethanol, folgende Schmelzpunkte auf:

| | |
|---|---|
| Beispiel 55 | : 168 bis 170 °C |
| Beispiel 56 | : 189 bis 190 °C |
| Beispiel 57 | : 63 bis 67 °C |
| Beispiel 58 | : 122 bis 124 °C |
| Beispiel 59 | : 76 bis 77,5 °C |
| Beispiel 60 | : 106 bis 108 °C |

Beispiele 61 bis 66

Herstellung von Bis- bzw. Tris-[3-(3,5-ditert.butyl-4-hydroxy-phenyl-) propionsäure-]estern verschiedener bi- bzw. trifunktioneller Alkohole

Nach der in den Beispielen 1 sowie 12 bis 21 angewandten Verfahrensweise werden die nach den Beispielen 55 bis 60 hergestellten mehrwertigen Alkohole in Gegenwart von Titantetrabutylat bei Temperaturen um 120 °C mit überschüssigem 3-(3,5-Ditert.butyl-4-hydroxyphenyl-)-propionsäuremethylester umgeestert. Die Reaktionszeiten liegen bei 5 bis 10 Stunden. Die Aufarbeitung und das Entfernen unumgesetzter bzw. überschüssiger Ausgangsmaterialien erfolgen wie in den früheren Beispielen. Wie bei diesen wird auch die Konstitution der jetzt erhaltenen nicht vorbeschriebenen Ester nach Umkristallisieren aus geeigneten Lösemitteln anhand der Lage und Intensität der Signale der der $^1$H-NMR-Spektren gesichert.

Beispiel 61

Bis-ester des 1,1-Bis-(4-(2'-hydroxyethoxy-)3-methyl-phenyl-)cyclododecans

| | |
|---|---|
| Ausbeute | : 71 % d. Th. |
| Schmelzpunkt | : 99 bis 102 °C (aus Ethanol) |

Beispiel 62

Bis-ester des 1,1-Bis-(4-(2'-hydroxyethoxy-)-3-tert.butyl-phenyl-)cyclododecans

| | |
|---|---|
| Ausbeute | : 54,1 % d. Th. |
| Schmelzpunkt | : 86 bis 90 °C (aus Petrolether) |
| Reinheit | : ≧ 95 % (lt. $^1$H-NMR) |

Beispiel 63

Bis-ester des 1,1-Bis-(4-(2'-hydroxyethoxy-)-3-tert.butyl-phenyl-)cyclohexans

| | |
|---|---|
| Ausbeute | : 85 % d. Th. |
| Schmelzpunkt | : 42 bis 50 °C |
| Reinheit | : ≧ 90 % (lt. $^1$H-NMR) |

Beispiel 64

Bisester des 2,2-Bis-(4-(2'-hydroxyethoxy-)-3-tert.butyl-phenyl-)propans

| | |
|---|---|
| Ausbeute | : 48 % d. Th. |
| Schmelzpunkt | : 113 bis 115 °C (aus Ethanol) |
| Reinheit | : ≧ 95 % (lt. $^1$H-NMR) |

Beispiel 65

Bis-ester des alpha,alpha'-Bis-[4-(2'-hydroxyethoxy-)-phenyl]-m-diisopropylbenzols

| | |
|---|---|
| Ausbeute | : 82,8 % der Theorie |
| Schmelzpunkt | : 53 bis 57 °C |
| Reinheit | : ≧ 95 % (lt. $^1$H-NMR) |

Beispiel 66

Tris-ester des 1,1,1-Tris-(4-(2'-hydroxyethoxy-)phenyl-)-ethans

| | |
|---|---|
| Ausbeute | : 76 % d. Th. |
| Schmelzpunkt | : 58 bis 65 °C |
| Reinheit | : ca. 90 % (lt. $^1$H-NMR) |

Beispiele 67 bis 71
Stabilisierung von Polypropylen mit erfindungsgemäßen Stabilisatoren (Beispiele 67 bis 70) und mit einem Stabilisator nach dem Stand der Technik (Vergleichsversuch Beispiel 71)

In der gleichen Weise wie in den Beispielen 22 bis 32 wird Polypropylen-Pulver mit 0,1 Gewichtsprozent der verschiedenen erfindungsgemäßen Stabilisatoren, die nach den Beispielen 14, 16, 20 und 21 hergestellt wurden, bzw. mit einem Stabilisator nach dem Stand der Technik (Tetra-[3-(3,5-Di-tert.butyl-4-hydroxyphenyl-)propionsäure-]-ester des Pentaerythrits) und mit 0,1 Gewichtsprozent Calciumstearat als Verarbeitungshilfsmittel sowie gegebenenfalls zusätzlich mit 0,1 Gewichtsprozent Bis-(octadecyl-)-thiodipropionsäureester (Abk. S) und mit 0,1 Gewichtsprozent Tris-(2,4-ditert.butylphenyl-)phosphit (Abk. P) vermischt. Die aus den Pulvermischungen gewonnenen Preßplatten werden zur Herstellung von Polyolefinstreifen benutzt, die bei 145 °C der Alterung im Umlufttrockenschrank unterworfen werden. Tabelle VII enthält die Ergebnisse.

An der bei 145 °C ermittelten Beständigkeit stabilisierter Polypropylenproben ist zu erkennen, daß die Wirkung der erfindungsgemäß eingearbeiteten Ester das Niveau der Proben erreicht oder übertrifft, bei denen der Stabilisator nach dem Stand der Technik verwandt wurde.

Beispiele 72 bis 76
Prüfung auf Farbveränderungen bei stabilisierten Polyethylenproben

Arbeitet man 0,1 Gewichtsprozent der erfindungsgemäßen Stabilisatoren, die nach den Beispielen 14, 16, 20 und 21 hergestellt wurden (Beispiele 72 bis 75), bzw. 0,1 Gewichtsprozent des auch im Vergleichsbeispiel 71 verwandten Stabilisators (nach dem Stand der Technik) sowie 0,1 Gewichtsprozent Calciumstearat in Polyethylenpulver ein und verpreßt man die daraus hergestellten Granulate bei 210 °C zu Platten mit den Maßen 4 × 10 × 100 mm, so lassen sich die an diesen nach vierwöchiger Alterung bei 100 °C visuell feststellbaren Farbveränderungen zu einer Bewertung heranziehen.

Die Prüfergebnisse zeigen, daß an den erfindungsgemäß stabiliserten Polyethylenplatten (Beispiele 72 bis 75) in keinem Fall stärkere Verfärbungen auftreten als an dem nach dem Stand der Technik stabilisierten Material (nicht erfindungsgemäßes Beispiel 76), wobei der Grad der Verfärbung bei sämtlichen Prüflingen gering ist.

Beispiele 77 bis 81
(Beispiel 81 nicht erfindungsgemäß)

Prüfung der Verarbeitungsstabilität von stabilisiertem Polypropylen

Nach den Beispielen 67 bis 71 hergestelltes stabilisiertes Polypropylenpulver wird analog zu den Beispielen 46 bis 50 bei maximal 270 °C auf einem Extrusimeter (Fa. Göpfert; d = 20 mm, l = 30 d; 30 Upm; Gangtiefenverhältnis 1 : 3) mehrfach extrudiert. Die an den erhaltenen Granulaten bei 190 °C gemessenen $I_5$-Werte (MFI) sind Tabelle VIII zu entnehmen.

Man erkennt, daß mit den erfindungsgemäßen Stabilisatoren, die in den Beispielen 77 bis 80 verwandt (und nach den Beispielen 14, 16, 20 und 21 hergestellt) wurden, vor allem in Gegenwart von Synergisten, Polypropylen ebensogut zu stabiliseren ist wie nach dem (durch das Beispiel 81 repräsentierten) Stand der Technik.

Tabelle VII

Alterungsversuche bei 145 °C unter Zusatz erfindungsgemäßer Stabilisatoren zu Polypropylen

| Bsp. Nr. | Stabilisator nach Bsp. Nr. | Formel der Stabilisatoren | Alterung bei 145 °C (Tage) | | |
|---|---|---|---|---|---|
| | | | A* | B* | C* |
| 67 | 14 | 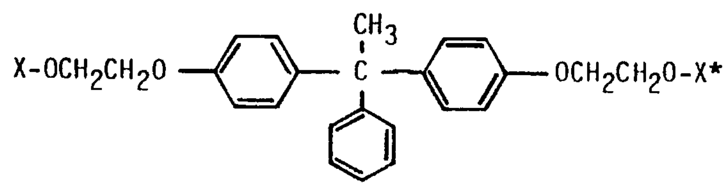 | 57 | 77 | 103 |
| 68 | 16 | 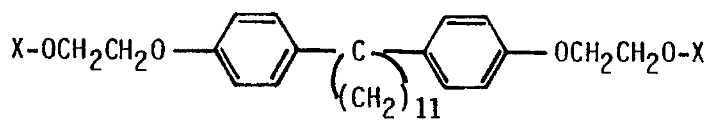 | 54 | 90 | 109 |
| 69 | 20 | 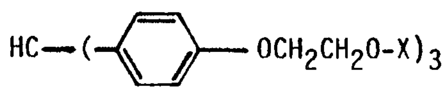 | 51 | 85 | 84 |

Fortsetzung Tabelle VII

Alterungsversuche bei 145 °C unter Zusatz erfindungsgemäßer Stabilisatoren zu Polypropylen

| Bsp. Nr. | Stabilisator nach Bsp. Nr. | Formel der Stabilisatoren | Alterung bei 145 °C (Tage) A* | B* | C* |
|---|---|---|---|---|---|
| 70 | 21 | 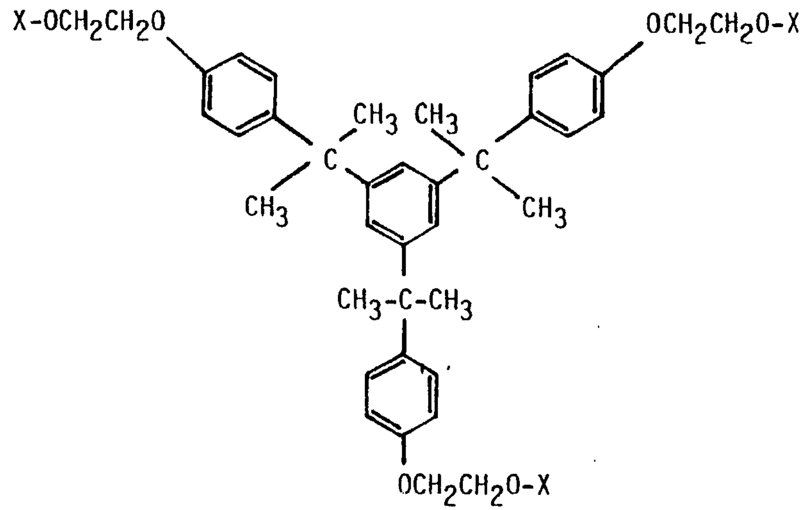 | 47 | 94 | 97 |
| 71 | Vergleichsversuch nach dem Stand der Technik | $C(CH_2O-X)_4$ | 53 | 87 | 98 |

Abkürzungen: (wie in Tabelle III)

A = 0,1 Gewichtsprozent Stabilisatorzusatz

B = wie A und zusätzlich 0,1 Gewichtsprozent Bis-(octadecyl-)-thiodiproprionsäureester

C = wie B und zusätzlich 0,1 Gewichtsprozent Tris-(2,4-ditert.butylphenyl-)-phosphit

X = 3-(3,5-Di-tert.-butyl-4-hydroxyphenyl)-propionsäurerest

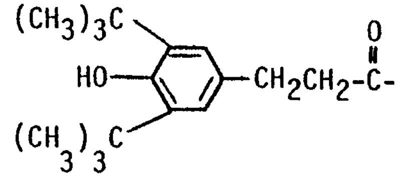

Tabelle VIII

Mehrfachextrusion stabilisierter Polypopylenproben (Göpfert-Extrusimeter)

| Beispiel Nr. | Polypropylen nach Beispiel Nr. | MFI-Werte (g/10 Min) nach Mehrfachextrusion ohne Zusatz von Synergisten * | | | | | | mit Zusatz von Synergisten** | | | | | |
|---|---|---|---|---|---|---|---|---|---|---|---|---|---|
| | | 0x | 1x | 2x | 3x | 4x | 5x | 0x | 1x | 2x | 3x | 4x | 5x |
| 77 | 67 | 3,2 | 8,5 | 13,7 | 19,9 | 25,0 | 33,4 | 3,3 | 4,3 | 4,9 | 5,8 | 6,8 | 8,2 |
| 78 | 68 | 3,3 | 7,9 | 12,8 | 19,0 | 24,4 | 31,9 | 2,9 | 4,1 | 5,0 | 5,7 | 7,0 | 8,6 |
| 79 | 69 | 3,0 | 6,5 | 10,4 | 13,9 | 18,6 | 25,1 | 3,0 | 4,1 | 4,9 | 5,6 | 7,1 | 7,5 |
| 80 | 70 | 4,5 | 9,2 | 14,1 | 20,2 | 24,9 | 31,9 | 2,9 | 4,1 | 5,0 | 5,7 | 7,0 | 8,6 |
| 81 | 71 Stand der Technik | 2,8 | 5,8 | 8,9 | 12,6 | 17,6 | 20,6 | 3,0 | 3,8 | 4,4 | 5,3 | 6,2 | 6,9 |

Erläuterungen: * Proben mit 0,1 Gewichtsprozent Stabilisator und 0,1 Gewichtsprozent Cacliumstearat

** Proben enthalten zusätzlich 0,1 Gewichtsprozent Bis-(octadecyl-)thiodipropionsäureester und 0,1 Gewichtsprozent Tris-(2,4-ditert.butylphenyl-)phosphit

## Patentansprüche

1. Ester der 3-tert.-Butyl- bzw. 3-tert.-Butyl-5-alkyl-4-hydroxyphenyl-(alkan)-carbonsäuren der Formel I

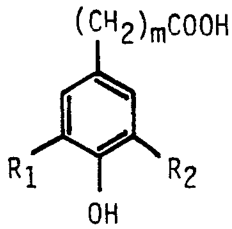

(I)

mit

$R_1$ = $-C(CH_3)_3$,

$R_2$ = H, $C_1$- bis $C_4$-Alkyl, vorzugsweise $-C(CH_3)_3$,

m = 0 bis 4, vorzugsweise 2,

mit Oxethylaten von Bis-(4- bzw. 2-hydroxyphenyl)-alkanen, -oxiden, -sulfiden und -sulfonen, vorzugsweise mit Oxethylaten von Bis-(4-hydroxyphenyl)-alkanen, -oxiden, -sulfiden und -sulfonen, der Formel II, mit Oxethylaten von Tris-(4-hydroxyphenyl)-alkanen der Formel III a oder mit Oxethylaten von 1,3,5-Tris-(4-hydroxyphenyl-isopropyliden)-arylen der Formel III b

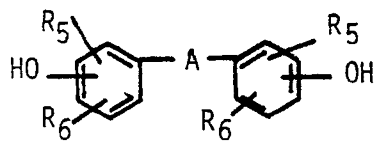

(II)

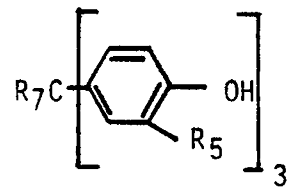

(III a)

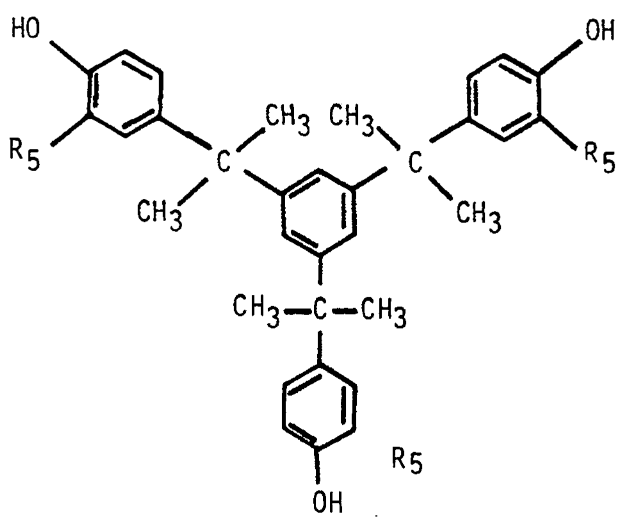

(III b)

mit

A = $-CR_3R_4-$ , $C_2$- bis $C_{12}$-Alkandiyl-, -O-, $-OCH_2CH_2O-$ , -S-, $-SCH_2CH_2S-$, $-SO_2-$, $-SO_2CH_2CH_2SO_2-$, Bis-isopropyliden-arylreste (≙ 1,4- bzw. 1,3-Bis-1-methyl-ethyl-arylenreste).

$R_3$, $R_4$ = H, $C_1$- bis $C_8$-Alkyl, Aryl, 4-[(4-Hydroxyphenyl)-isopropyliden]-phenyl (≙ 4[1-(4-Hydroxyphenyl)-1-methyl-ethyl]-phenyl-), $C_5$- bis $C_{12}$-Cycloalkyl, vorzugsweise Alkyl, jedoch nicht $R_3$ und $R_4$ = $CH_3$, sofern $R_5$ und R6 = H,

wobei für $R_3$, $R_4$ = Alkyl diese Substituenten auch zu einem ggf. alkylsubstituierten Ring mit ≦ $C_{12}$-Atomen geschlossen sein können, (d. H. -$CR_3R_4$- = Cycloalkyliden),

$R_5$, $R_6$ = H, $C_1$- bis $C_4$-Alkyl, $C_5$- bis $C_{12}$-Cycloalkyl, $C_1$- bis $C_4$- Alkoxyl, vorzugszweise H, wobei für $R_5$, $R_6$ ≠ H in Formel II nicht beide Substituenten in o- bzw. o'-Stellung zum phenolischen Hydroxyl stehen dürfen,

$R_7$ = H, $C_1$- bis $C_8$-Alkyl,

wobei die Oxethylate maximal 3 Alkylenoxideinheiten, vorzugsweise Ethylenoxideinheiten, enthalten können,

2. Ester der 3-(3,5-Di-tert.-butyl-4-hydroxyphenyl)-propionsäure der Formel I a

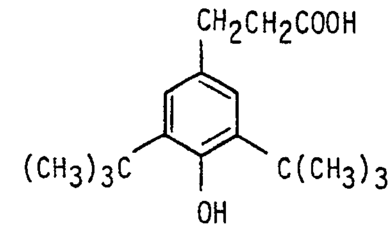

(I a)

mit Oxethylaten von Bis-(4- bzw. 2-hydroxyphenyl)-alkanen, -oxiden, -sulfiden und -sulfonen, vorzugsweise mit Oxethylaten von Bis-(4-hydroxyphenyl)-alkanen, -oxiden, -sulfiden und -sulfonen, der Formel II, vorzugsweise mit A = -$CR_3(R_4)$-, -O-, -S-, -$SO_2$-, Bis-(isopropyliden)-phenyl und $R_3$, $R_4$ = H, $CH_3$ - (sofern $R_5$, $R_6$ ungleich H) bzw. -$CR_3(R_4)$- = 1,1-Cyclohexyliden, 1,1-Cyclododecyliden, mit Oxethylaten von Tris-(4-hydroxyphenyl)-alkanen der Formel III a, vorzugsweise mit $R_5$ = H,
oder mit Oxethylaten von 1,3,5-Tris-(4-hydroxyphenyl-isopropyliden)-arylen der Formel III b,
wobei die Oxethylate maximal drei Alkylenoxideinheiten, vorzugsweise Ethylenoxideinheiten, enthalten können.

3. Ester nach den Ansprüchen 1 und 2 mit Oxethylaten von Bis- bzw. Tris-(4-hydroxyphenyl)-alkanen, -oxiden, -sulfiden und -sulfonen der Formeln II bzw. IIIa sowie von 1,3,5-Tris-(4-hydroxyphenyl-isopropyliden)-arylen der Formel IIIb, die bevorzugt eine Ethylenoxideinheit (als 2-Hydroxyethoxygruppe) anstelle der Hydroxylgruppen der Verbindungen der Formeln II bzw. III enthalten.

4. Ester nach den Ansprüchen 1 und 2 mit Bis-(monooxethylaten) des alpha,alpha'-Bis-(4-hydroxyphenyl)-p- bzw. -m-diisopropylbenzols, des 1,1-Bis-(4-hydroxyphenyl)-cyclohexans, des 1,1-Bis-(4-hydroxy-3-tert.butylphenyl)- cyclohexans, des 1,1-Bis-(4-hydroxyphenyl)-cyclododecans, des 1,1-Bis-(4-hydroxy-3-methylphenyl)-cyclododecans, des 1,1-Bis-(4-hydroxy-3-tert.butylphenyl)-cyclododecans, des 1,1-Bis-(4-hydroxyphenyl)-1-phenylethans, des 2,2-Bis-(4-hydroxy-3-tert.butylphenyl)-propans, des Bis-(2-hydroxy-3-cyclohexyl-5-methyl-phenyl)-methans, des Bis-(4-hydroxyphenyl)-ethers, des Bis-(4-hydroxyphenyl)-sulfids, des Bis-(4-hydroxyphenyl)-sulfons und
mit Tris-(monooxethylaten) des Tris-(4-hydroxyphenyl)-methans, des 1,1,1-Tris-(4-hydroxyphenyl)-ethans und des 1,3,5-Tris-(4-hydroxyphenyl-isopropyliden)-benzols.

5. Verfahren zur Herstellung der Ester nach einem der Ansprüche 1 bis 4,
dadurch gekennzeichnet,
daß man die 3-tert.-Butyl- bzw. 3-tert.-Butyl-5-alkyl-4-hydroxyphenyl-(alkan)-carbonsäuren bzw. deren Derivate mit Oxethylaten von Bis-(4- bzw. 2-hydroxyphenyl)-alkanen, -oxiden, -sulfiden und -sulfonen sowie von Tris-(4-hydroxyphenyl)-alkanen und von 1,3,5-Tris-(4-hydroxyphenyl-isopropyliden)-arylen in Gegenwart von an sich bekannten, vorzugsweise basischen oder neutralen Katalysatoren verestert bzw. umestert.

6. Verwendung der Ester nach einem der Ansprüche 1 bis 4 zur Stabilisierung von Polymeren.

7. Verwendung der Ester nach einem der Ansprüche 1 bis 4 zur Stabilisierung.von Polyolefinen.

8. Verwendung der Ester nach einem der Ansprüche 1 bis 4 zur Stabilisierung von Polyethylen und Polypropylen.

9. Verwendung der Ester nach einem der Ansprüche 1 bis 4 in einer Konzentration von 0,02 bis 3 Gewichtsprozent, vorzugsweise von 0,05 bis 2 Gewichtsprozent, bezogen auf das Polymere, zur Stabilisierung der Polymeren.

**Claims**

1. Esters of 3-tert.-butyl- or 3-tert.-butyl-5-alkyl-4-hydroxyphenyl-(alkane)-carboxylic acids of Formula I

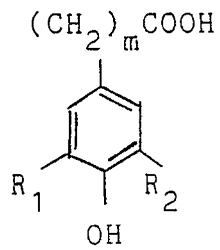

(I)

where
$R_1$ = $-C(CH_3)_3$,
$R_2$ = H, $C_1$- to $C_4$-alkyl, preferably $-C(CH_3)_3$,
m = 0 to 4, preferably 2,
with ethoxylates of bis-(4- or 2-hydroxyphenyl)-alkanes, oxides, sulphides and sulphones, preferably with ethoxylates of bis-(4-hydroxyphenyl)-alkanes, oxides, sulphides and sulphones of Formula II, with ethoxylates of tris-(4-hydroxyphenyl)-alkanes of Formula III a, or with ethoxylates of 1,3,5-tris-(4-hydroxyphenyl-isopropylidene)-arylene of Formula III b

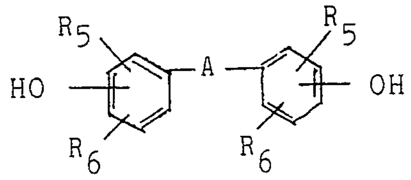

(II)

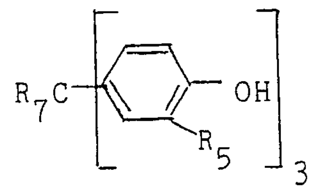

(III a)

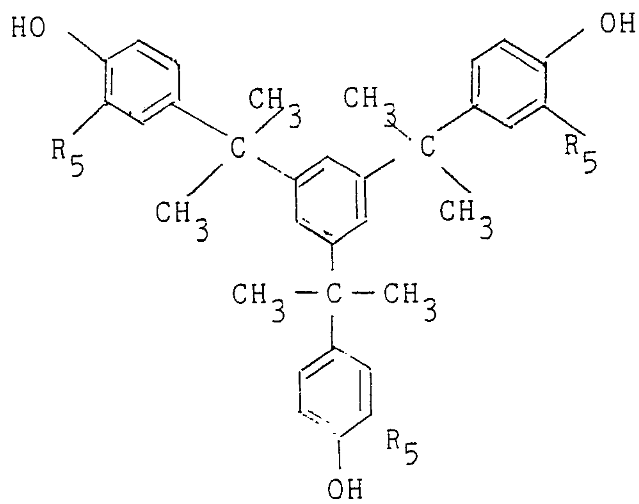

(III b)

where

A = $-CR_3R_4-$, $C_2$- to $C_{12}$-alkane diyl-, -O-, $-OCH_2CH_2O-$,-S-, $-SCH_2CH_2S-$, $-SO_2-$, $-SO_2CH_2CH_2SO_2-$, bis-isopropylidene aryl radicals (≙ 1,4- or 1,3-bis-1-methyl-ethyl-arylene radicals),

$R_3$, $R_4$ = H, $C_1$- to $C_8$-alkyl, aryl, 4-[(4-hydroxyphenyl)-isopropylidene]-phenyl (≙ 4[1-(4-hydroxyphenyl)-1-methyl-ethyl]-phenyl-), $C_5$- to $C_{12}$-cycloalkyl, preferably alkyl, but not $R_3$ and $R_4$ = $CH_3$, if $R_5$ and $R_6$ = H,
while for $R_3$, $R_4$ = alkyl these substituents can also be closed to form an if necessary alkyl-substituted ring with $\leq$ $C_{12}$-atoms (i.e., $-CR_3R_4-$ = cycloalkylidene),

$R_5$, $R_6$ = H, $C_1$- to $C_4$-alkyl, $C_5$- to $C_{12}$-cycloalkyl, $C_1$- to $C_4$-alkoxyl, preferably H,
while for $R_5$, $R_6$ = H in Formula II not both substituents must be in the o-or o'-position in relation to the phenolic hydroxyl,

$R_7$ = H, $C_1$- to $C_8$-alkyl,

the ethoxylates possibly containing a maximum of 3 alkyleneoxide units, preferably ethyleneoxide units.

**2.** Esters of 3-(3,5-di-tert.-butyl-4-hydroxyphenyl)-propionic acid of Formula I a

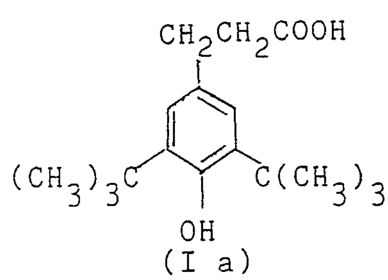

(I a)

with ethoxylates of bis-(4- or 2-hydroxyphenyl)-alkanes, oxides, sulphides and sulphones, preferably

with ethoxylates of bis-(4-hydroxyphenyl)-alkanes, oxides, sulphides and sulphones of Formula II, preferably with A = $-CR_3(R_4)-$, -O-, -S-, $-SO_2-$, bis-(isopropylidene)-phenyl and $R_3$, $R_4$ = H, $CH_3$ (if $R_5$, $R_6$ do not = H) or $-CR_3(R_4)-$ = 1,1-cyclohexylidene, 1,1-cyclododecylidene, with ethoxylates of tris-(4-hydroxyphenyl)-alkanes of Formula III a, preferably where $R_5$ = H, or with ethoxylates of 1,3,5-tris-(4-hydroxyphenyl-isopropylidene)-arylene of Formula III b, the ethoxylates possibly containing a maximum of three alkylene oxide units, preferably ethylene oxide units.

3. Esters according to claims 1 and 2 with ethoxylates of bis- or tris-(4-hydroxyphenyl)-alkanes, oxides, sulphides and sulphones of Formulae II or III a and also of 1,3,5-tris-(4-hydroxyphenyl-isopropylidene)-arylene of Formula III b, which preferably contain an ethylene oxide unit (as a 2-hydroxyethoxy group) instead of the hydroxyl groups of the compounds of Formulae II or III.

4. Esters according to claims 1 and 2 with bis-(monooxethylates) of alpha, alpha'-bis-(4-hydroxyphenyl)-p- or -m-diisopropyl benzene, 1,1-bis-(4-hydroxyphenyl)-cyclohexane, 1,1-bis-(4-hydroxy-3-tert.-butylphenyl)-cyclohexane, 1,1-bis-(4-hydroxyphenyl)-cyclododecane, 1,1-bis-(4-hydroxy-3-methylphenyl)-cyclododecane, 1,1-bis-(4-hydroxy-3-tert.-butylphenyl)-cyclododecane, 1,1-bis-(4-hydroxyphenyl)-1-phenyl ethane, 2,2-bis-(4-hydroxy-3-tert.-butylphenyl)-propane, bis-(2-hydroxy-3-cyclohexyl-5-methyl-phenyl)-methane, bis-(4-hydroxyphenyl)-ether, bis-(4-hydroxyphenyl sulphide, bis-(4-hydroxyphenyl)-sulphone and
with tris-(mono-ethoxylates) of tris-(4-hydroxyphenyl)-methane, 1,1,1-tris-(4-hydroxyphenyl)-ethane and 1,3,5-tris-(4-hydroxyphenyl-isopropylidene)-benzene.

5. A process for the preparation of the esters according to one of claims 1 to 4, characterized in that the 3-tert.-butyl- or 3-tert.-butyl-5-alkyl-4-hydroxy-phenyl-(alkane)-carboxylic acids or their derivatives with ethoxylates of bis-(4- or 2-hydroxyphenyl)-alkanes, oxides, sulphides and sulphones and also of tris-(4-hydroxyphenyl)-alkanes and 1,3,5-tris-(4-hydroxyphenyl-isopropylidene)-arylene are esterified or reesterified in the presence of known, preferably basic or neutral catalysts.

6. Use of the esters according to one of claims 1 to 4 for the stabilization of polymers.

7. Use of the esters according to one of claims 1 to 4 for the stabilization of polyolefins.

8. Use of the esters according to one of claims 1 to 4 for the stabilization of polyethylene and polypropylene.

9. Use of the esters according to one of claims 1 to 4 in a concentration of 0.02 to 3% by weight, preferably 0.05 to 2% by weight, referred to the polymer, for the stabilization of the polymers.

## Revendications

1. Esters d'acides 3-ter.-butyl ou 3-ter.-butyl 5-alcoyl-4-hydroxyphényl-(alcane)-carboxyliques de formule (I) :

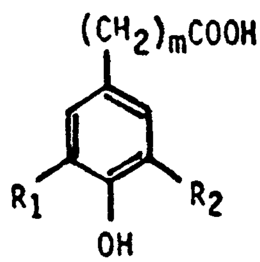

(I)

avec
$R_1$ = -C $(CH_3)_3$

$R_2$ = H, $C_1$ à $-C_4$, à alcoyl de préférence $C(CH_3)_3$
m = 0 à 4, de préférence 2,

avec des oxoéthylates de bis-(4-ou. 2-hydroxyphényl)-alacanes, -oxydes, -sulfures et -sulfones, de préférence avec des oxoéthylates de bis-(4-hydroxyphényl)-alcanes, oxydes sulfures et sulfones de formule II, avec des oxoéthylates de tris-(4-hydroxyphényl)-alcanes de formule III ou avec des oxoéthylates de 1,3,5-tris-(4-hydroxyphényl-(isopropylidène)-arylènes de formule IIIb :

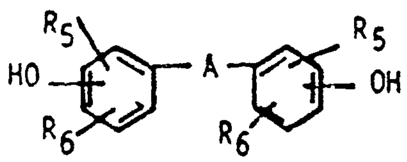

(II)

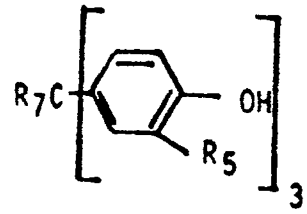

(III a)

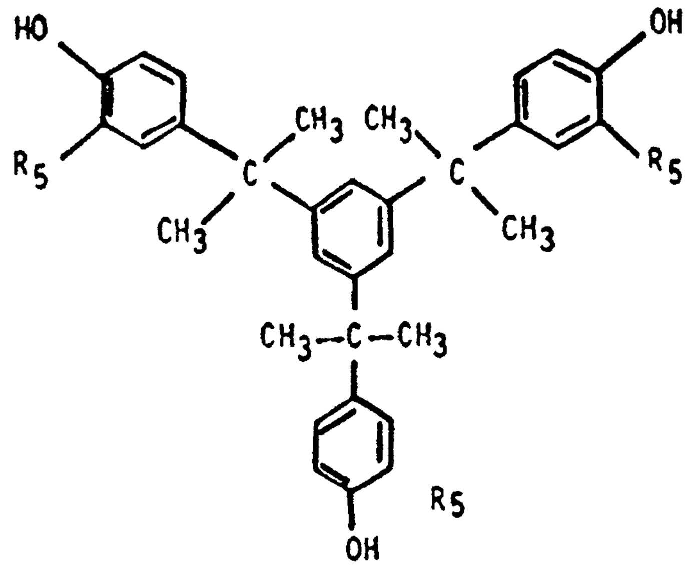

(III b)

avec A = $-CR_3R_4-$,$C_2$ à $C_{12}$ - alcanediyle -, -O-,$-OCH_2$ $CH_2O-$,-S-, $-SCH_2CH_2S-$, $-SO_2-$, $-SO_2CH_2CH_2SO_2-$, des radicaux bis-isopropylidène-aryle (= des radicaux 1,4-ou 1,3-bis-1- méthyl-éthylarylène)

$R_3$,$R_4$ = H, $C_1$ à $C_8$-acoyle, aryle, 4-[(4-hydroxy-phényl)-isopropylène]-phényle(=4[1-(4-hydroxy-phényl)-1-méthyléthyl]-phényle-), en $C_5$- à $C_{12}$, -cycloalcoyle de préférence alcoyle, cependant $R_3$ et $R_4$ ne sont pas méthyle pour autant que $R_5$ et $R_6$ = H,

dans laquelle pour $R_3$ et $R_4$ = alcoyle, ces substituants peuvent aussi être fermés sur un cycle éventuellement substitué par un alcoyle ayant jusqu'à 12 atomes de carbone (c'est-à-dire - $CR_3R_4$- = cycloalcoylidène),

$R_5$ et $R_6$ = H, $C_1$ à $C_4$-alcoyle, $C_5$ à $C_{12}$- cycloalcoyle, $C_1$ à $C_4$ alcoyle, de préférence H,

dans laquelle pour $R_5$, $R_6$ ≠ H dans la formule II les deux substiutants ne peuvent pas être situés en position O- ou. O'- par rapport à l'hydroxyle phénolique,

$R_7$ = H, $C_1$ à $C_8$ -alcoyle,

dans laquelle l'oxoéthylate peut renfermer au maximum 3 unités oxyde d'alcoylène, de préférence des unités oxyde d'éthylène.

**2.** Esters de l'acide 3-(3,5-di-tert.-butyl-4-hydroxyphényl)-propionique de formule Ia :

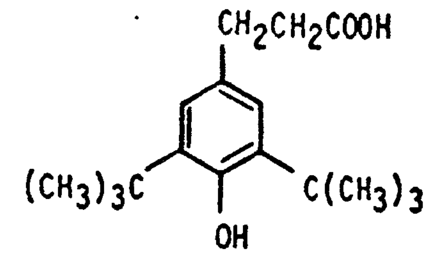

(I a)

avec des oxoéthylates de bis-(4-ou. 2-hydroxyphényl)-alcanes, -oxydes, -sulfures ou -sulfones, de préférence avec des oxoéthylates de bis-(4-hydroxyphényl)-alcanes, -oxydes -sulfures ou sulfones de formule II, de préférence avec A = $-CR_3(R_4)-$, -O-, -S-, $-SO_2-$, bis-(isopropylidène)-phényle et $R_3$, $R_4$ = H, $CH_3$ (pour autant que $R_5$ et $R_6$ sont différents de H),
ou. $-CR_3(R_4)-$ = 1,1-cyclohexylidène, 1,1-cyclododécylène, avec des oxoéthylates de tris-(4-hydroxyphényl)-alcanes de formule IIIa de préférence avec $R_5$ = H,
ou avec des oxoéthylates de 1,3,5-tris-(4-hydroxyphényl-isopropylidène)-arylène de formule IIIb, pour lesquels les oxoéthylates peuvent renfermer au maximum trois unités oxyde d'alcoylène, de préférence des unités d'oxyde d'éthylène.

3. Ester selon les revendications 1 et 2 avec des oxoéthylates de bis- ou. tris-(4-hydroxyphényl)-alcanes, -oxydes, -sulfures ou -sulfones de formule II ou IIIa ainsi que de 1,3,5-tris-(4-hydroxyphényl-(isopropylidène)-arylène de formule IIIb, qui renferment de préférence une unité oxyde d'éthylène (sous forme de groupe (2-hydroxyéthoxy) au lieu des groupes hydroxy des formules II ou III.

4. Ester selon les revendications 1 et 2 avec des bis- (monooxoéthylates) d'$\alpha$, $\alpha'$-bis-(4-hydroxyphényl)-p-ou. -m-diisopropylbenzène, du 1,1-bis-(4-hydroxyphényl)-cyclohexane, du 1,1-bis-(4-hydroxy-3-tert.butylphenyle)-cyclohexane, du 1,1-bis-(4-hydroxyphényl)-cyclododécane, du 1,1-bis-(4-hydroxy-3-méthylphényl)-cyclododécane, du 1,1-bis-(4-hydroxy-3-tert.butylphényl)- cyclododicane, du 1,1-bis-(4-hydroxyphényl)-1-phényléthane, du 2,2-bis-(4-hydroxy-3-ter-butylphényl)-propane, du bis-(2-hydroxy-3-cyclohexyl-5-méthyl-phényl)-méthane, du bis-(4-hydroxyphényl)-éther, du bis-(4-hydroxyphényl)-sulfure, du bis-(4-hydroxyphényl)-sulfone et avec les tris-(monooxéthylates) de tris-(4-hydroxyphényl)-méthane, de 1,1,1-tris-(4-hydroxyphényl)-éthane, et de 1,3, 5-tris-(4-hydroxyphényl-(isopropylidène)-benzène.

5. Procédé d'obtention des esters selon l'une des revendications 1 à 4, caractérisé en ce que l'on transestérifie ou estérifie les acides 3-ter.-butyl ou. 3-ter.-butyl-5-alcoyl-4-hydroxyphényl-(alcane) carboxyliques ou leurs dérivés avec des oxoéthylates de bis-(4- ou. 2-hydroxyphényl)-alcanes, -oxydes, -sulfures et -sulfones ainsi que de tris-(4-hydroxyphényl)-alcanes et de 1,3,5-tris-(4-hydroxyphényl-(isopropylidène)-arylène en présence de catalyseurs connus en soi, de préférence basiques ou neutres.

6. Utilisation des esters selon l'une des revendications 1 à 4 pour la stabilisation de polymères.

7. Utilisation des esters selon l'une des revendications 1 à 4 pour la stabilisation de polyoléfines.

8. Utilisation des esters selon l'une des revendications 1 à 4 pour la stabilisation du polyéthylène et du polypropylène.

9. Utilisation des esters selon l'une des revendications 1 à 4 à une concentration de 0,02 à 3 % en poids, de préférence de 0,05 à 2 % en poids, rapporté au polymère, pour la stabilisation des polymères.